# EUROPEAN PATENT APPLICATION

(11) **EP 4 746 312 A1**
(43) Date of publication of application: **20.05.2026**
(21) Application number: 23960432.5
(22) Date of filing: 04.12.2023
(51) Int. Cl.: H04B 7/185

(54) **WIRELESS COMMUNICATION METHODS, TERMINAL DEVICES, AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: GUO, Boren, Dongguan, Guangdong 523860 (CN)
(74) Representative: RGTH
(86) International application number: PCT/CN2023/136238
(87) International publication number: WO 2025/118117

(57) **Abstract**

Provided are wireless communication methods, terminal devices, and communication devices. A wireless communication method comprises: a first network element sending first information to a second network element, the first information being associated with a first satellite serving a second terminal device, wherein the second network element comprises a first terminal device or a network element serving the first terminal device. In this embodiment of the present application, a first network element sends first information to a second network element, wherein the first information is associated with a first satellite serving a second terminal device, thereby facilitating a first terminal device in learning about the first satellite serving the second terminal device.

## Description

### TECHNICAL FIELD

This application relates to the field of communications technologies, and more specifically, to a wireless communication method, a terminal device, and a communications device.

### BACKGROUND

Currently, in a satellite network architecture, a terminal device may communicate with another terminal device by using one or more satellites. However, in this communication scenario, how to determine a satellite serving a second terminal device is a problem to be urgently solved.

### SUMMARY

This application provides a wireless communication method, a terminal device, and a communications device. The following describes the aspects related to this application.

According to a first aspect, a wireless communication method is provided, and the method includes: transmitting, by a first network element, first information to a second network element, where the first information is associated with a first satellite serving a second terminal device. The second network element includes a first terminal device or a network element serving the first terminal device.

According to a second aspect, a wireless communication method is provided, and the method includes: receiving, by a second network element, first information transmitted by a first network element, where the first information is associated with a first satellite serving a second terminal device. The second network element includes a first terminal device or a network element serving the first terminal device.

According to a third aspect, a wireless communication method is provided, and the method includes: transmitting, by a first terminal device, a second request to a fifth network element, where the second request is used to request authorizing the first terminal device to perform communication with a second terminal device by using a satellite.

According to a fourth aspect, a wireless communication method is provided, and the method includes: receiving, by a fifth network element, a second request transmitted by a first terminal device, where the second request is used to request authorizing the first terminal device to perform communication with a second terminal device by using a satellite.

According to a fifth aspect, a wireless communication method is provided, and the method includes: receiving, by a second terminal device, a second request transmitted by a first terminal device, where the second request is used to request authorizing the first terminal device to perform communication with the second terminal device by using a satellite.

According to a sixth aspect, a wireless communication method is provided, and the method includes: transmitting, by a seventh network element, configuration information to a first satellite. The configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

According to a seventh aspect, a wireless communication method is provided, and the method includes: receiving, by a first satellite, configuration information transmitted by a seventh network element, where the configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

According to an eighth aspect, a wireless communication method is provided, and the method includes: transmitting, by an eighth network element, second information to a ninth network element, where the second information is used to determine service range information of a satellite associated with the eighth network element.

According to a ninth aspect, a wireless communication method is provided, and the method includes: receiving, by a ninth network element, second information transmitted by an eighth network element, where the second information is used to determine service range information of a satellite associated with the eighth network element.

According to a tenth aspect, a communications device is provided, and the communications device is a first network element and includes: a transmitting unit, configured to transmit first information to a second network element, where the first information is associated with a first satellite serving a second terminal device. The second network element includes a first terminal device or a network element serving the first terminal device.

According to an eleventh aspect, a communications device is provided, where the communications device is a second network element and includes: a receiving unit, configured to receive first information transmitted by a first network element, where the first information is associated with a first satellite serving a second terminal device. The second network element includes a first terminal device or a network element serving the first terminal device.

According to a twelfth aspect, a terminal device is provided, where the terminal device is a first terminal device and includes: a transmitting unit, configured to transmit a second request to a fifth network element, where the second request is used to request authorizing the first terminal device to perform communication with a second terminal device by using a satellite.

According to a thirteenth aspect, a communications device is provided, where the communications device is a fifth network element and includes: a receiving unit, configured to receive a second request transmitted by a first terminal device, where the second request is used to request authorizing the first terminal device to perform communication with a second terminal device by using a satellite.

According to a fourteenth aspect, a terminal device is provided, where the terminal device is a second terminal device and includes: a receiving unit, configured to receive a second request transmitted by a first terminal device, where the second request is used to request authorizing the first terminal device to perform communication with the second terminal device by using a satellite.

According to a fifteenth aspect, a communications device is provided, where the communications device is a seventh network element, and includes: a transmitting unit, configured to transmit configuration information to a first satellite, where the configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

According to a sixteenth aspect, a communications device is provided, where the communications device is a first satellite and includes: a receiving unit, configured to receive configuration information transmitted by a seventh network element, where the configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

According to a seventeenth aspect, a communications device is provided, where the communications device is an eighth network element and includes: a transmitting unit, configured to transmit second information to a ninth network element, where the second information is used to determine service range information of a satellite associated with the eighth network element.

According to an eighteenth aspect, a communications device is provided, where the communications device is a ninth network element and includes: a receiving unit, configured to receive second information transmitted by an eighth network element, where the second information is used to determine service range information of a satellite associated with the eighth network element.

According to a nineteenth aspect, a terminal device is provided. The terminal device includes a processor, a memory, and a communications interface, where the memory is configured to store one or more computer programs; and the processor is configured to invoke the computer program in the memory, to cause the terminal device to execute some or all of the steps in the method according to the foregoing aspects.

According to a twentieth aspect, a communications device is provided. The terminal device includes a processor, a memory, and a transceiver. The memory is configured to store one or more computer programs, and the processor is configured to invoke the computer program in the memory, to cause the communications device to execute some or all of the steps in the method according to the foregoing aspects.

According to a twenty-first aspect, an embodiment of this application provides a communication system, where the system includes the terminal device and/or network device described above. In another possible design, the system may further include another device that interacts with the terminal device or the communications device in solutions provided in embodiments of this application.

According to a twenty-second aspect, an embodiment of this application provides a computer-readable storage medium. The computer-readable storage medium stores a computer program, and the computer program causes a communication device (for example, a terminal device or a network device) to execute some or all of the steps in the method according to the foregoing aspects.

According to a twenty-third aspect, an embodiment of this application provides a computer program product. The computer program product includes a non-transitory computer-readable storage medium that stores a computer program. The computer program is operable to cause a communications device (for example, a terminal device or a communication device) to execute some or all of the steps in the method according to the foregoing aspects. In some implementations, the computer program product may be a software installation package.

According to a twenty-fourth aspect, an embodiment of this application provides a chip. The chip includes a memory and a processor. The processor may invoke a computer program from the memory and run the computer program, to implement some or all of steps described in the method according to the foregoing aspects.

In embodiments of this application, a first network element may transmit first information to a second network element, where the first information is associated with a first satellite serving a second terminal device. The second network element may be a first terminal device or a network element serving the first terminal device, which helps the first terminal device learn the first satellite serving the second terminal device.

### BRIEF DESCRIPTION OF DRAWINGS

FIG. 1A to FIG. 1C are system architectural diagrams of communications systems to which embodiments of this application are applicable.
FIG. 2A to FIG. 2E are system architectural diagrams of satellite communications systems to which embodiments of this application are applicable.
FIG. 3 is a schematic flowchart of a wireless communication method according to an embodiment of this application.
FIG. 4 is a schematic flowchart of a wireless communication method according to an embodiment of this application.
FIG. 5 is a schematic flowchart of a wireless communication method according to an embodiment of this application.
FIG. 6 is a schematic diagram of a wireless communication method according to an embodiment of this application.
FIG. 7 to FIG. 9 are schematic flowcharts of a method for requesting authorization for a first terminal device to perform UE-satellite-UE communication according to an embodiment of this application.
FIG. 10 is a schematic flowchart of a wireless communication method according to an embodiment of this application.
FIG. 11 is a schematic flowchart of a method for configuring a communications link according to an embodiment of this application.
FIG. 12 is a schematic flowchart of a wireless communication method according to an embodiment of this application.
FIG. 13 is a schematic flowchart of a solution for transmitting satellite service information according to an embodiment of this application.
FIG. 14 is a schematic diagram of a communications device according to an embodiment of this application.
FIG. 15 is a schematic diagram of a communications device according to an embodiment of this application.
FIG. 16 is a schematic diagram of a terminal device according to an embodiment of this application.
FIG. 17 is a schematic diagram of a communications device according to an embodiment of this application.
FIG. 18 is a schematic diagram of a terminal device according to an embodiment of this application.
FIG. 19 is a schematic diagram of a communications device according to an embodiment of this application.
FIG. 20 is a schematic diagram of a communications device according to an embodiment of this application.
FIG. 21 is a schematic diagram of a communications device according to an embodiment of this application.
FIG. 22 is a schematic diagram of a communications device according to an embodiment of this application.
FIG. 23 is a schematic diagram of a structure of a communications apparatus according to an embodiment of this application.

### DESCRIPTION OF EMBODIMENTS

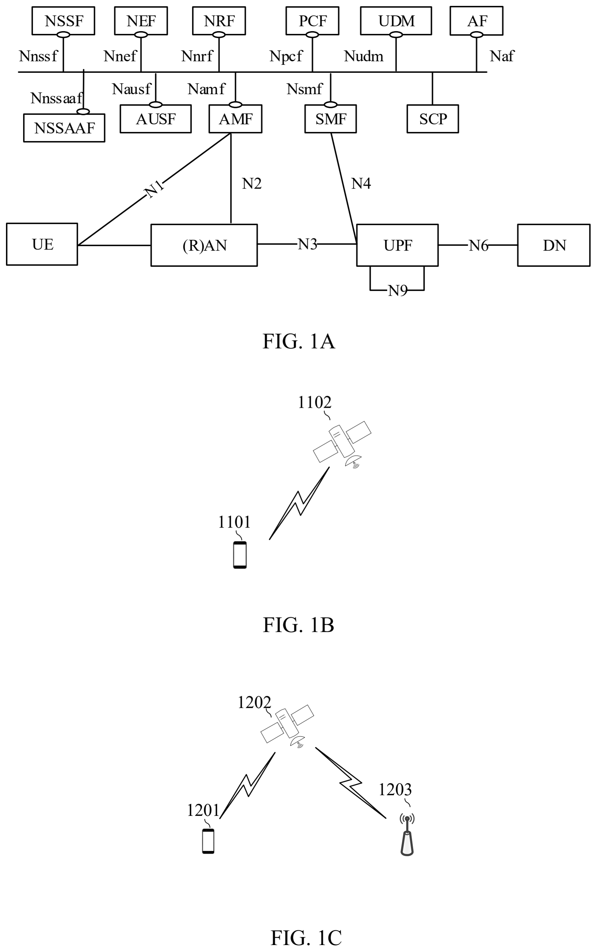

Technical solutions in this application are described below with reference to the accompanying drawings. For ease of understanding, the following first describes a schematic diagram of a communications system architecture according to an embodiment of this application with reference to FIG. 1. FIG. 1 is a schematic diagram of a communication system architecture to which embodiments of the application are applicable. The network architecture may include a terminal device, an access network (access network, AN) network element, and a core network element.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless core network element, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to serve as a base station. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station.

The access network element may be an access network device. An access network device may be an access device that is accessed by a terminal to the network architecture in a wireless manner, and is mainly responsible for radio resource management on an air interface side, quality of service (quality of service, QoS) management, data compression and encryption, and the like. The access network device may also be referred to as a radio access network (radio access network, RAN) device. For example, the access network device may be a base station. The base station may broadly cover devices having the following various names, or may be interchanged with the devices having following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that assumes the function of a base station in D2D, V2X, and machine-to-machine (machine-to-machine, M2M) communications, a network-side device in a 6G network, a device that assumes the function of a base station in a future communications system, or the like. The base station may support networks of a same access technology or different access technologies. A specific technology and a specific device used by the access network device are not limited in embodiments of this application.

The base station may be a stationary or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the access network device in embodiments of this application may be a CU or a DU, or the access network device includes a CU and a DU. The gNB may further include an AAU.

A type (type) of a core network element may include a user plane function (user plane function, UPF) network element, an access and mobility management function (access and mobility management function, AMF) network element, a session management function (session management function, SMF) network element, a policy control function (policy control function, PCF) network element, an application function (application function, AF), a data network (data network, DN), a network slice selection function (network slice selection function, NSSF), an authentication server function (authentication server function, AUSF), a unified data management (unified data management, UDM) function, a network exposure function (the network exposure function, NEF), a network repository function (network repository function, NRF), and a network slice-specific authentication and authorization function (network slice-specific authentication and authorization function, NSSAAF). The UPF network element is mainly responsible for user data transmission. Other network elements may be referred to as control plane function network elements, and are mainly responsible for certification, authentication, registration management, session management, mobility management, policy control, and the like, so as to ensure reliable and stable user data transmission.

The UPF network element may be configured to forward and receive data of a terminal. For example, the UPF network element may receive service data from the data network, and transmit the service data to the terminal through the access network device. The UPF network element may further receive user data from the terminal through the access network device, and forward the user data to the data network. Transmission resources allocated and scheduled by the UPF network element to the terminal are managed and controlled by the SMF network element. Bearers between a terminal and the UPF network element may include: a user plane connection between the UPF network element and the access network device, and a channel established between the access network device and the terminal. The user plane connection is a QoS flow (flow) that may be established between the UPF network element and the access network device for data transmission.

The AMF network element may be configured to manage access of a terminal to a core network, for example, location update of the terminal, network registration, access control, mobility management of the terminal, and attachment and detachment of the terminal. In a case of providing a service for a session of the terminal, the AMF network element may further provide storage resources of a control plane for the session, so as to store a session identifier, an SMF network element identifier associated with the session identifier, and the like.

The SMF network element may be configured to: select a user plane network element for the terminal, redirect a user plane network element for the terminal, allocate an internet protocol (internet protocol, IP) address to the terminal, establish a bearer (also referred to as a session) between the terminal and the UPF network element, modify and release a session, and control QoS.

The PCF network element is configured to provide a policy for the AMF network element and the SMF network element, for example, a QoS policy or a slice selection policy.

The AF network element is configured to: interact with a network element in the 3GPP core network to support an application in affecting data routing, access a network exposure function, and interact with the PCF network element for policy control, and the like.

The DN may provide a data service for a user in an IP multi-media service (IP multi-media service, IMS) network or the Internet. There may be a plurality of application servers (application server, AS) in the DN, and different application services are provided, such as an operator service, an Internet access service, or a third-party service. The AS may implement a function of the AF.

The NSSF is configured to select a network slice and supports the following functions: selecting a network slice instance set that serves a terminal device; determining allowed network slice selection assistance information (Network Slice Selection Assistance Information, NSSAI), and determining a mapping to subscribed single-network slice selection assistance information (Single-Network Slice Selection Assistance Information, S-NSSAI) when required; determining configured NSSAI, and determining a mapping to subscribed S-NSSAI when required; and determining an AMF set that may be used to query a terminal device, or determining a list of candidate AMFs based on a configuration.

The AUSF is configured to: receive an identity authentication request for the terminal from the AMF, request a key from the UDM, and then forward a delivered key to the AMF for authentication processing.

The UDM includes functions such as generation and storage of user subscription data, and authentication data management, and supports interaction with an external third-party server.

The NEF is configured to implement capability exposure, that is, a capability of a network may be output to an external network based on the NEF. External untrusted applications may access internal data of a core network through the NEF, to ensure security of a network. The NEF may provide functions such as QoS capability exposure for external applications, event subscription, and AF request distribution.

The NRF is configured to perform registration, management, and status detection of a core network element, so as to implement automatic management of the core network element. When the core network element is started, it is necessary to register with the NRF to provide a service. For example, registration information may include a type, an address, a service list, and the like of the core network element.

In addition, for some networks (for example, a 5G network), a network data analytics function (network data analytics function, NWDAF) is further added to a core network. Based on the NWDAF, data may be collected from various network elements and network management systems of the core network, and big data statistics, analysis, or intelligent data analysis may be performed, to obtain network-side analysis or prediction data, thereby assisting all network elements to implement more effective control on a terminal device access based on data analysis results.

In some communications systems (for example, a 5G system), a core network element may also be referred to as a network function (network function, NF).

In FIG. 1, each network element may be a network component in a hardware device, a software function running on dedicated hardware, or a virtualized function instantiated on a platform (for example, a cloud platform). It should be noted that in the network architecture shown in the foregoing figure, network elements included in the entire network architecture are merely described as examples. The network elements included in the entire network architecture are not limited in embodiments of this application.

A person skilled in the art may understand that the network architecture shown in FIG. 1 does not constitute a limitation on network architecture. In specific implementation, the network architecture may include more or fewer network elements than those shown in the figure, or combine some network elements, or the like. It should be understood that in FIG. 1, the AN or the RAN is represented in a manner of (R)AN.

In some scenarios, the network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

By way of example rather than limitation, in embodiments of this application, the network device may have a mobility characteristic. For example, the network device may be a mobile device. In some embodiments of this application, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (small cell). The small cell herein may include a metro cell (metro cell), a micro cell (micro cell), a pico cell (pico cell), a femto cell (femto cell), or the like. These small cells feature small coverage and low transmit power, and are suitable for providing a high-speed data transmission service.

Exemplarily, FIG. 1B is a schematic diagram of an architecture of another communications system according to an embodiment of this application. Referring to FIG. 1B, a terminal device 1101 and a satellite 1102 are included, and wireless communication may be performed between the terminal device 1101 and the satellite 1102. A network formed between the terminal device 1101 and the satellite 1102 may also be referred to as an NTN. In the architecture of the communications system shown in FIG. 1B, the satellite 1102 may have a function of a base station, and direct communication may be performed between the terminal device 1101 and the satellite 1102. In the system architecture, the satellite 1102 may be referred to as a network device. In some embodiments of this application, the communications system may include a plurality of network devices 1102, and another quantity of terminal devices may be included in coverage of each network device 1102, which is not limited in embodiments of this application.

Exemplarily, FIG. 1C is a schematic diagram of an architecture of another communications system according to an embodiment of this application. Referring to FIG. 1C, a terminal device 1201, a satellite 1202, and a base station 1203 are included, wireless communication may be performed between the terminal device 1201 and the satellite 1202, and communication may be performed between the satellite 1202 and the base station 1203. A network formed between the terminal device 1201, the satellite 1202, and the base station 1203 may also be referred to as an NTN. In the architecture of the communications system shown in FIG. 1C, the satellite 1202 may not have a function of a base station, and communication between the terminal device 1201 and the base station 1203 is required to be relayed by using the satellite 1202. In the architecture of the system, the base station 1203 may be referred to as a network device. In some embodiments of this application, the communications system may include a plurality of network devices 1203, and another quantity of terminal devices may be included in coverage of each network device 1203, which is not limited in embodiments of this application.

It should be noted that FIG. 1A to FIG. 1C are merely examples of systems to which this application is applicable. Certainly, the methods shown in embodiments of this application may also be applied to another system, such as a 5G communications system or an LTE communications system. This is not specifically limited in embodiments of this application.

In some embodiments of this application, the wireless communications systems shown in FIG. 1A to FIG. 1C may further include another network entity such as a mobility management entity (mobility management entity, MME) or an access and mobility management function (access and mobility management function, AMF), which is not limited in embodiments of this application.

It should be understood that in embodiments of this application, a device having a communication function in a network or a system may be referred to as a communications device. The communications system 100 shown in FIG. 1A is used as an example. The communications device may include a network device 110 and a terminal device 120 that have a communication function. The network device 110 and the terminal device 120 may be the foregoing specific devices, and details are not described herein again. The communications device may further include another device in the communications system 100, such as a network controller or a mobility management entity. This is not limited in embodiments of this application.

It should be understood that, in embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

"Configured" in embodiments of this application may include being configured by using at least one of system information, radio resource control (radio resource control, RRC) signalling, or a medium access control control element (media access control control element, MAC CE).

In some embodiments of this application, "predefined" or "preset" may be implemented by pre-storing corresponding codes, tables, or other forms that can be used to indicate related information in devices (for example, including the terminal device and the network device), and a specific implementation thereof is not limited in this application. For example, being predefined may refer to being defined in a protocol.

In some embodiments of this application, the "protocol" may refer to a standard protocol in the communication field, which may include, for example, an LTE protocol, an NR protocol, and a related protocol applied to a future communications system. This is not limited in this application.

For ease of understanding, some relevant technical knowledge related to embodiments of this application is first described. The following related technologies, as optional solutions, may be randomly combined with the technical solutions in embodiments of this application, all of which fall within the protection scope of embodiments of this application. Embodiments of this application include at least a part of the following content.

### Non-terrestrial network (non-terrestrial network, NTN)

Currently, the 3rd generation partnership project (3rd generation partnership project, 3GPP) is currently researching NTN technologies. An NTN generally provides a communication service for a terrestrial user through satellite communication. Satellite communication has many unique advantages over terrestrial cellular network communication.

First, the satellite communication is not limited by a geographic location of a user. For example, a general terrestrial communication network cannot cover an area such as an ocean, a mountain, or a desert in which a network device cannot be set up. Alternatively, the terrestrial communications network does not cover some areas that are sparsely populated. However, for the satellite communication, since one satellite may cover a relatively large terrestrial area, and the satellite can orbit the earth, theoretically, every position on the earth can be covered by a satellite communication network.

Second, satellite communication has great social value. Satellite communication may cover remote mountainous areas, impoverished countries or regions at relatively low costs, thereby enabling people in these regions to enjoy advanced voice communication and mobile internet technologies. From this point of view, satellite communication is conducive to narrowing a digital divide with developed regions and promoting development of these regions.

Third, satellite communication has an advantage of a long distance, and an increase in the communication distance does not significantly increase a communication cost.

Finally, the satellite communication has high stability, and is not affected by natural disasters.

Communications satellites are classified into a low earth orbit (low earth orbit, LEO) satellite, a medium earth orbit (medium earth orbit, MEO) satellite, a geostationary earth orbit (geostationary earth orbit, GEO) satellite, a high elliptical orbit (high elliptical orbit, HEO) satellite, and the like according to different orbital altitudes. At this stage, the LEO satellite and the GEO satellite are mainly studied.

An altitude of the LEO satellite generally ranges from 500 km to 1500 km. Correspondingly, an orbital period of the LEO satellite is about 1.5 hours to 2 hours. For the LEO satellite, a signal propagation delay of single-hop communication between users is generally less than 20 ms. A maximum satellite visible time of the LEO satellite is about 20 minutes. The LEO satellite has advantages of a short signal propagation distance, a small link loss, and a low transmit power requirement for a terminal device of a user.

An orbital altitude of the GEO satellite is 35,786 km. A period for the GEO satellite to rotate around the earth is 24 hours. For the GEO satellite, a signal propagation delay of single-hop communication between users is generally about 250 ms.

To ensure satellite coverage and improve a system capacity of an entire satellite communications system, a satellite usually uses a plurality of beams to cover a terrestrial area. Therefore, one satellite may generate dozens or even hundreds of beams to cover the terrestrial area. One beam of a satellite may cover a terrestrial area with a diameter of approximately tens to hundreds of kilometers.

Currently, an NTN system includes an NR-NTN system and an Internet of Things (internet of things, IoT)-NTN system.

### Satellite network architecture

A scenario in which information transmitted between terminal devices may be locally routed by using a UPF deployed on a satellite without passing through a satellite gateway on the ground is discussed in some protocols (such as R18). Currently, a scenario in which a UPF is deployed on a satellite mainly includes two modes: Mode 1 and mode 2.

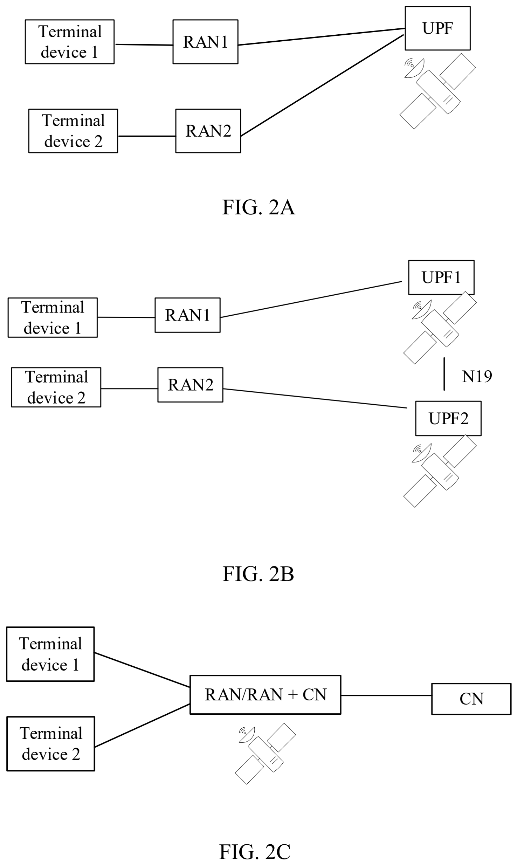

In mode 1, information between a plurality of terminal devices may be locally forwarded by using a UPF on one satellite. Referring to FIG. 2A, a terminal device 1 and a terminal device 2 may communicate with each other by using a UPF disposed on a satellite. In this mode, an RAN 1 serving the terminal device 1 and an RAN 2 serving the terminal device 2 may be located on the ground.

In mode 2, information between a plurality of terminal devices may be forwarded by using UPFs deployed on a plurality of satellites, and the plurality of UPFs deployed on the plurality of satellites may perform the forwarding by using an interface N19. Referring to FIG. 2B, a UPF 1 and a UPF 2 are respectively located on a satellite 1 and a satellite 2. Correspondingly, communication between a terminal device 1 and a terminal device 2 may be performed by using the UPF 1 on the satellite 1 and the UPF 2 on the satellite 2. In addition, in this mode, the RAN 1 serving the terminal device 1 and the RAN 2 serving the terminal device 2 may be located on the ground.

In some implementations, satellite network architectures shown in FIG. 2A and FIG. 2B may be used for satellite backhaul. In some other implementations, three satellite network architectures that may be used for satellite access are further provided, which are described below with reference to FIG. 2C to FIG. 2E. Certainly, in embodiments of this application, a scenario to which the foregoing satellite network architectures are applicable is not limited.

Referring to FIG. 2C, a network element deployed on a satellite may include an access network element, or a network element deployed on a satellite may include an access network element and a core network device. Correspondingly, both a terminal device 1 and a terminal device 2 may communicate, by using a network element deployed on a satellite, with a network element (for example, a core network element) deployed on the ground.

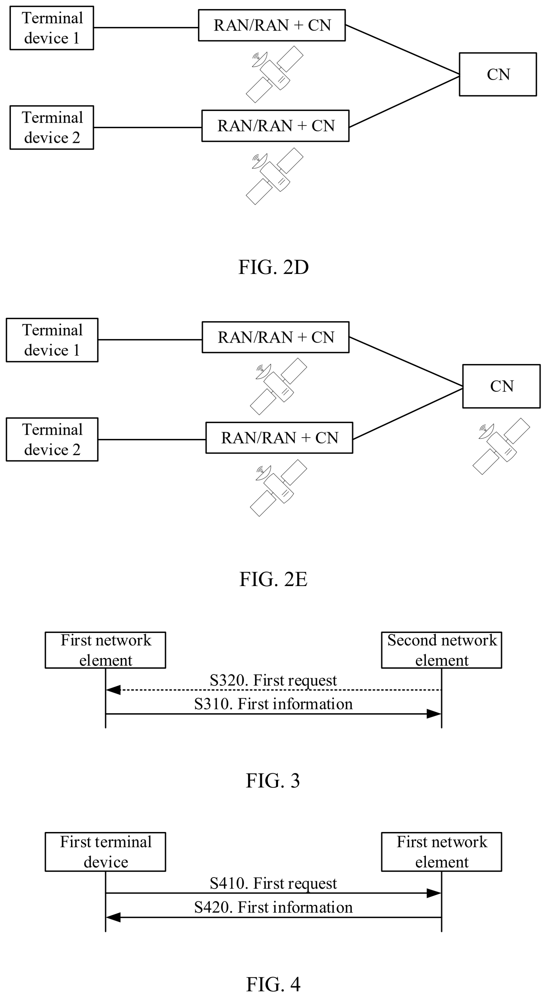

Referring to FIG. 2D, a network element deployed on a satellite may include an access network element, or a network element deployed on a satellite may include an access network element and a core network device. In addition, a network element serving a terminal device 1 is deployed on a satellite 1, and a network element serving a terminal device 2 is deployed on a satellite 2. Accordingly, the terminal device 1 may communicate with a network element (for example, a core network element) deployed on the ground by using the network element deployed on the satellite 1. The terminal device 2 may communicate with the network element (for example, the core network element) deployed on the ground by using the network element deployed on the satellite 2.

Referring to FIG. 2E, a network element deployed on a satellite may include an access network element, or a network element deployed on a satellite may include an access network element and a core network device. In addition, a network element serving a terminal device 1 is deployed on a satellite 1, and a network element serving a terminal device 2 is deployed on a satellite 2. Accordingly, the terminal device 1 may communicate, by using the network element deployed on the satellite 1, with a network element (for example, a core network element) deployed on another satellite. The terminal device 2 may communicate, by using the network element deployed on the satellite 2, with the network element (for example, the core network element) deployed on the another satellite.

In some implementations, an operator may allocate a combination of DNN/S-NSSAI to a UPF, so as to deploy a satellite UPF to serve communication between terminal devices.

In some implementations, if a satellite backhaul (backhaul) type is indicated, a PCF may consider generating or updating a URSP rule. For example, a route selection descriptor for a serviceable node deployed on a satellite may be included in the URSP, thereby enabling a PDU session established on a satellite by a PSA UPF.

In some implementations, if an SMF chooses to deploy an anchor UPF of a PDU session of a terminal device on a satellite, the SMF may configure an N4 session of the terminal device to forward/detect a data packet from an internal interface.

In some implementations, to establish an N19 tunnel between PSA UPFs on a satellite, the PSA UPF may be controlled by a same SMF, and the SMF may reuse a 5G VN group (5G VN group) to configure a group-level N4 rule for each N19 tunnel.

In some implementations, to process a data packet transmitted between a terminal device and a server in a DN, the SMF may configure a rule to route traffic through an N6.

In some implementations, the group-level N4 sessions may be identified based on a corresponding DNN and a corresponding S-NSSAI. Accordingly, the SMF may create, update or delete a group-level N4 session, that is, add or delete an N4 rule, and allocate or release N19 tunnel resources according to operator deployment. For example, the SMF may disable N19 tunnel resources based on a GEO satellite as planned. For another example, the SMF may configure N19 tunnel resources based on a new GEO satellite.

In some implementations, an N6 interface may be configured to carry traffic between PSA UPFs deployed on different satellites. If the N6 interface is used to transmit the traffic between PSA UPFs on different satellites, the SMF may configure a corresponding N4 rule to process the traffic entering and leaving the N6 interface.

The foregoing describes a satellite network architecture to which embodiments of this application are applicable and a manner of transmitting information in the satellite network architecture. In some scenarios, some requirements for a communications system (for example, a 5G communications system) with a satellite access function are specified.

Requirement 1: According to a supervision requirement and an operator policy, the communications system with the satellite access function should support UE-satellite-UE (UE-Satellite-UE) communication, regardless of whether a feeder link is available.

Requirement 2: According to a supervision requirement and an operator policy, the communication system with the satellite access function should provide QoS control of UE-Satellite-UE communication.

Requirement 3: According to a supervision requirement and an operator policy, the communications system with the satellite access function should be capable of supporting UE-Satellite-UE communications of different service types, where the service types may include, for example, a voice service, a message service, a broadband service, a unicast service, a multicast service, and a broadcast service.

Currently, in a satellite network architecture, a terminal device may communicate with another terminal device by using one or more satellites. However, in this communication scenario, there are many problems to be urgently solved. The following describes with reference to Embodiment 1 to Embodiment 4.

### Embodiment 1

As described above, in a satellite network architecture, a first terminal device may communicate with a second terminal device by using one or more satellites. However, how to determine a satellite (hereinafter referred to as "a first satellite") serving the second terminal device is a problem to be urgently solved.

To solve the foregoing problem, an embodiment of this application provides a wireless communication method. In the method, a first network element may transmit first information to a second network element, where the first information is associated with a first satellite serving a second terminal device. The second network element may be a first terminal device or a network element serving the first terminal device, which helps the first terminal device learn the first satellite serving the second terminal device.

In some implementations, the first terminal device may be a terminal device that requests to acquire the first satellite. For example, the first terminal device may be a terminal device that participates in UE-Satellite-UE communication and is ready to initiate UE-Satellite-UE communication to the second terminal device.

In some implementations, the first satellite may be used for communication between the first terminal device and the second terminal device, or the first satellite may provide a service for information transmitted between the first terminal device and the second terminal device.

In embodiments of this application, the first terminal device and the second terminal device are not limited. In some implementations, the first terminal device may be a transmit end for the UE-Satellite-UE communication, and correspondingly, the second terminal device may be a receive end for the UE-Satellite-UE communication. In some other implementations, the first terminal device may be a receive end for the UE-Satellite-UE communication, and correspondingly, the second terminal device may be a transmit end for the UE-Satellite-UE communication.

In embodiments of this application, a quantity of second terminal devices is not limited. In some implementations, the second terminal device may be one or more terminal devices. In some other implementations, the second terminal device may include one or more terminal devices in a terminal device group. In some other implementations, the second terminal device may include one or more terminal devices in a target area. For example, the first terminal device is required to transmit broadcast information to all terminal devices in the target area. In this case, the second terminal device that performs UE-Satellite-UE communication with the first terminal device may be all the terminal devices in the target area.

The following describes a wireless communication method according to an embodiment of this application with reference to FIG. 3. Referring to FIG. 3, in step S310, the first network element transmits the first information to the second network element.

In some implementations, the first information being associated with the first satellite serving the second terminal device may include that the first information is used to indicate the first satellite serving the second terminal device, and/or that the first information is used to indicate a time in which the first satellite servers the second terminal device. For related description of the first information, reference may be made to the following.

In some implementations, the first information includes one or more of the following: identifier information of the second terminal device; identifier information of one or more first satellites; identifier information of a network element deployed on each first satellite; or information for indicating a time in which one or more satellites serve the second terminal device.

For example, the first information includes the identifier information of the second terminal device. In some implementations, the identifier information of the second terminal device may include one or more of the following: a telephone number, a generic public subscription identifier (generic public subscription identifier, GPSI), a subscription permanent identifier (subscription permanent identifier, SUPI), a subscription concealed identifier (subscription concealed identifier, SUCI), a permanent equipment identifier (permanent equipment identifier, PEI), a temporary mobile subscriber identity (temporary mobile subscriber identity, TMSI), a globally unique temporary UE identity (globally unique temporary UE identity, GUTI), a 5G-S-temporary mobile subscription identifier (5G S-temporary mobile subscription identifier, 5G-S-TMSI), a global unique asset identifier (global unique asset identifier, GUAMI), a radio network temporary identifier (radio network temporary identifier, RNTI), a cell-radio network temporary identifier (Cell-radio network temporary identifier, C-RNTI), or an inactive RNTI (inactive RNTI, I-RNTI). In some other implementations, the identifier information of the second terminal device may include a group identifier (group ID) of the second terminal device.

In embodiments of this application, the identifier information of the second terminal device may be carried in the first information, to facilitate identification of the second terminal device, so as to determine a satellite serving the second terminal device.

For example, the first information includes the identifier information of one or more first satellites. In some scenarios, because a location of a satellite is variable, the first satellite serving the second terminal device may include a plurality of satellites.

In some implementations, the one or more satellites may further belong to one satellite group.

In embodiments of this application, the one or more satellites may be indicated by using the first information. In this way, the first satellite may be selected from the one or more satellites, to improve flexibility of determining the first satellite.

For example, the first information includes the identifier information of the network element deployed on the first satellite. In some scenarios, the first satellite may refer to a plurality of satellites, and correspondingly, the first information may include identifier information of network elements respectively deployed on the plurality of satellites. In embodiments of this application, the network element serving the second terminal device may be determined by using the identifier information, indicated by the second information, of the network elements respectively deployed on the plurality of satellites, so as to improve flexibility of determining the network element serving the second terminal device.

In some implementations, the identifier information of the network element on the first satellite may include identifier information of a network element that is deployed on the first satellite and serving the second terminal device.

In embodiments of this application, the identifier information of the foregoing network element is not limited. In an example in which an access network device is deployed on the first satellite, the identifier information of the network element on the first satellite may include an access network device identifier. In an example in which an AMF is deployed on the first satellite, the identifier information of the network element on the first satellite may include an AMF identifier. In an example in which an SMF is deployed on the first satellite, the identifier information of the network element on the first satellite may include an SMF identifier.

For example, the first information includes information for indicating a time (also referred to as "a service time") for providing, by the first satellite, a service for the second terminal device, which helps the first terminal device select the first satellite based on the foregoing service time. For example, the service time of the selected first satellite includes a communication time between the first terminal device and the second terminal device, so as to improve accuracy of selecting the first satellite.

In some scenarios, the first satellite may include a plurality of satellites, and accordingly, the first information may be used to indicate times in which respective first satellites serve the second terminal device.

In embodiments of this application, a manner of indicating the service time is not limited. In some implementations, the first information may include one or more of the following: a start time of the service time, an end time of the service time, or duration of the service time.

For example, the first information indicates only the start time of the service time. In this case, the duration of the service time may be predefined or pre-configured. In this case, a first device may determine the service time based on the start time and the duration.

For another example, the first information indicates only the end time of the service time. In this case, duration of the service time may be predefined or pre-configured. In this case, the first device may determine the service time based on the end time and the duration.

In embodiments of this application, an implementation manner of the service time is not limited. In some implementations, the service time may be represented by a time window. In some other implementations, the service time may alternatively be represented by a period of time. In some other implementations, the service time may alternatively be represented by an instant.

The foregoing describes the first information in embodiments of this application, and the following describes a transmission manner of the first information in embodiments of this application. In some scenarios, the first network element may directly transmit the first information to the second network element. For example, the first network element is the second terminal device, and the second network element may provide a service for the first terminal device and the second terminal device. In this case, the second network element may directly communicate with the second terminal device. The following describes a wireless communication method according to an embodiment of this application with reference to FIG. 4.

In embodiments of this application, the first network element may include one or more of the following: a UE, an access network device, an AMF, an SMF, an NWDAF, a DN, or an application server. In some implementations, the first network element may be deployed on the ground or on a satellite.

In embodiments of this application, the second network element may include one or more of the following: an access network device, an AMF, an SMF, a UDM, an NRF, an NWDAF, a DN, or an application server. In some implementations, the second network element may be deployed on the ground or on a satellite.

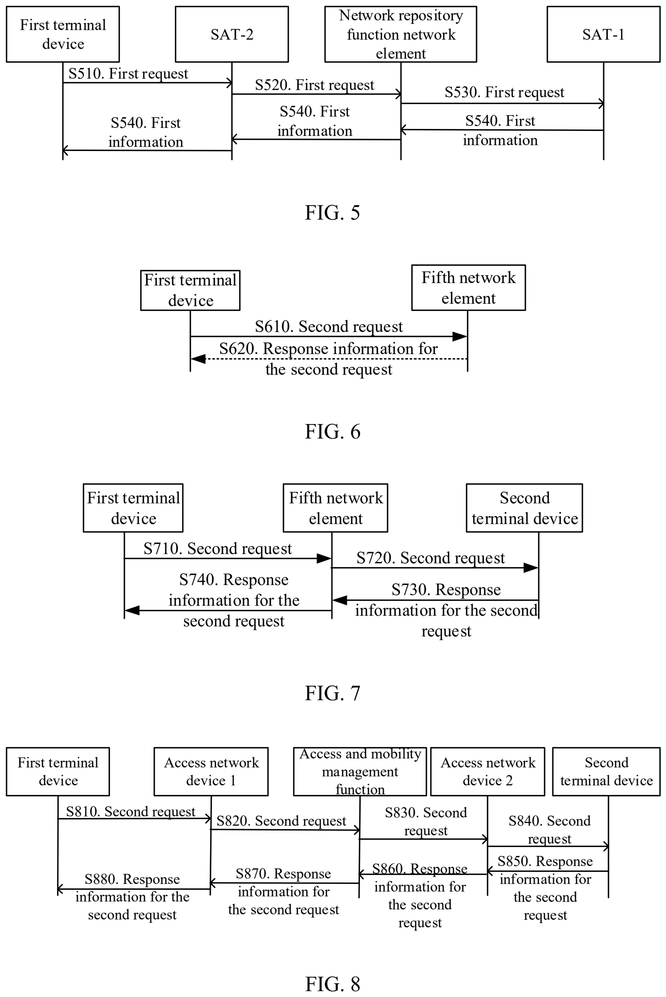

In some other scenarios, the first network element may transmit the first information to the second network element by using a third network element, where the third network element may include a network element having a network repository function and/or a network element serving the first terminal device. In other words, the step S310 includes: transmitting, by the first network element, the first information to the second network element by using the third network element. The following describes a wireless communication method according to an embodiment of this application with reference to FIG. 5.

In some implementations, the third network element includes the network element having the network repository function, and the network element may store related information of a satellite serving the second terminal device. In other words, the network element having the network repository function may determine, based on the stored information, a first satellite serving the second terminal device. For example, the network element may store context information of the second terminal device, identifier information of the first satellite, identifier information of a network element deployed on the first satellite, service time of the first satellite, or the like.

Certainly, in embodiments of this application, the network element having the network repository function may further store related information of a satellite, in a network, providing a service for another terminal device. In other words, when the first network element cannot determine a satellite serving the second terminal device, the first network element may find out the first satellite by using the network repository function.

In embodiments of this application, the network element having the network repository function is introduced to store the related information of the satellite serving the second terminal device, which is beneficial for improving a possibility of searching for the satellite serving the second terminal device.

In some implementations, the network element having the network repository function may be deployed on the ground, to obtain related information of a satellite in a relatively large service range. Certainly, in embodiments of this application, the network element having the network repository function may alternatively be located on a satellite. For example, the network element having the network repository function may be located on the first satellite. For another example, the network element having the network repository function may be located on a satellite serving the first terminal device. For another example, the network element having the network repository function may be located on another satellite.

In some implementations, the network element serving the first terminal device may include an access network device, or the network element serving the first terminal device may include an access network device and an access and mobility management network element. In some other implementations, the network element serving the first terminal device may further include one or more of the following: an AMF, an MME, an SMF, an SGW, a PGW, a UDM, a UDR, or an NRF. Certainly, in embodiments of this application, the network element serving the first terminal device may further be a new network element introduced in a future communications system, for example, a new network element used for satellite communication management and introduced in the future communications system.

In embodiments of this application, deployment manners of the network element having the network repository function and the network element serving the first terminal device are not limited. For example, the network element having the network repository function and the network element serving the first terminal device are located on a same satellite. For another example, the network element having the network repository function and the network element serving the first terminal device are located on different satellites. For another example, the network element having the network repository function is located on the ground, and the network element serving the first terminal device is located on a satellite.

In some implementations, the network element serving the second terminal device may include an access network device, or the network element serving the second terminal device may include an access network device and an access and mobility management network element.

For example, the first network element is a second terminal device, and the second network element cannot directly communicate with the second terminal device, or the second network element serves only the first terminal device but not the second terminal device. In this case, the second network element is required to obtain the first information from the second terminal device by using the third network element.

For example, the first network element includes a network element serving the second terminal device. However, the first network element does not provide a service for the first terminal device. In addition, the second network element cannot directly communicate with the second terminal device, or the second network element serves only the first terminal device but not the second terminal device. In this case, the second network element is required to obtain the first information from the first network element by using the third network element.

It should be noted that the first network element and the second network element may be located on different satellites. In this case, communication between the first network element and the first network element may be performed by using an inter-satellite link.

In some scenarios, the first information may be requested by the second network element, that is, before the step S310, the method further includes step S320: transmitting, by the second network element, a first request to the first network element, where the first request is used to request information about a satellite serving the second terminal device.

In some implementations, the first request is used to request the first information, that is, the first information may be transmitted based on the first request, which helps avoid transmitting the first information in an unnecessary case, thereby improving utilization of resources for transmitting the first information.

In some implementations, the first request may include one or more of the following: information associated with the second terminal device; information associated with the first terminal device; or information for indicating a time for communication between the first terminal device and the second terminal device.

In an example in which the first request includes the information associated with the second terminal device, the first request carries the information associated with the second terminal device, so as to help identify the second terminal device.

In some implementations, the information associated with the second terminal device includes one or more of the following: identification information of one or more second terminal devices; address information of one or more second terminal devices; identifier information of a terminal group in which the second terminal device is located; or target area information.

In some implementations, the identifier information of the second terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations, the address information of the second terminal device may include, for example, an internet protocol (internet protocol, IP) address or a media access control (media access control, MAC) address of the second terminal device.

In some implementations, the identifier information of the terminal group in which the second terminal device is located may include, for example, a group identifier of the terminal group in which the second terminal device is located.

In some implementations, the target area indicated by the target area information is used to determine the second terminal device. For example, one or more terminal devices in the target area are all the second terminal device. It is assumed that the first request carries the target area information but does not carry the identifier information of the second terminal device. In this case, it may be understood that the first satellite requested by the first request serves all terminal devices in the target area, that is, all the terminal devices in the target area are the second terminal device.

For another example, the target area is an area in which the second terminal device is located. In this case, the target area may be replaced with location information of the second terminal device.

In embodiments of this application, the target area information is not specifically limited. In some implementations, the target area information may include one or more of the following: a tracking area identity (tracking area identity, TAI), a cell identity, a longitude of the target area, or a latitude of the target area. In some other implementations, if the target area is used to indicate the location information of the second terminal device, the location information of the second terminal device may include travel track information of the second terminal device, or the location information of the second terminal device may be information about a location where the second terminal device is located.

For example, the first request includes the information associated with the first terminal device, which is beneficial for determining the first satellite based on the information associated with the first terminal device, so as to avoid a case that that communication between the first terminal device and the second terminal device cannot be performed by using the first satellite caused when a time in which the selected first satellite serves the second terminal device and a time for communication between the first terminal device and the second terminal device are staggered, thereby improving properness of selecting the first satellite.

In some implementations, the information associated with the first terminal device includes one or more of the following: identifier information of the first terminal device; address information of the first terminal device; identifier information of one or more satellites serving the first terminal device; ephemeris information of one or more satellites serving the first terminal device; service area information of one or more network elements serving the first terminal device; identifier information of network elements in one or more satellites serving the first terminal device; or information about a time in which the one or more satellites serve the first terminal device.

In some implementations, the identifier information of the first terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations, the address information of the first terminal device may include an IP address of the first terminal device or a MAC address of the first terminal device.

In some implementations, the identifier information of the one or more satellites serving the first terminal device may include an identifier information of each satellite or identifier information of a group in which the one or more satellites are located. The identifier information of the group in which the one or more satellites are located may include identifier information of a satellite group.

In some implementations, for the ephemeris information of one or more satellites serving the first terminal device, the ephemeris information of the satellites is used to indicate an orbit of the satellite. Therefore, the ephemeris information of the satellites is also referred to as orbit data of the satellites.

In embodiments of this application, ephemeris information of a satellite carried in the first request may be used to determine duration in which the satellite serves the first terminal device, and/or a time in which the satellite serves the first terminal device. For example, when a receive end of the first request is the second terminal device, the second terminal device may determine, based on the ephemeris information, a time of coverage of the first terminal device by the satellite serving the first terminal device, and/or coverage duration of the satellite serving the first terminal device. For another example, when a receive end of the first request includes a network element such as an AMF or an MME, the network element may determine, based on the ephemeris information, a time of coverage of the first terminal device by the satellite serving the first terminal device.

In some implementations, the first request may include the information about the time in which the one or more satellites serve the first terminal device, and the time is also referred to as a "service time". Alternatively, the first request may include times in which the respective ones of the one or more satellites serve the first terminal device.

In embodiments of this application, the service time is carried in the first request, which is beneficial for selecting a satellite serving the second terminal device. For example, the service time in which the first satellite serves the first terminal device may include the service time carried in the first request, so that the first terminal device and the second terminal device may communicate with each other by using the satellite in the service time.

In embodiments of this application, a manner of indicating the service time is not limited. In some implementations, the first request may include one or more of the following: a start time of the service time, an end time of the service time, or duration of the service time.

For example, the first request indicates only the start time of the service time. In this case, the duration of the service time may be predefined or pre-configured. In this case, a first device may determine the service time based on the start time and the duration.

For another example, the first request indicates only the end time of the service time. In this case, duration of the service time may be predefined or pre-configured. In this case, the first device may determine the service time based on the end time and the duration.

In embodiments of this application, an implementation manner of the service time is not limited. In some implementations, the service time may be represented by a time window. In some other implementations, the service time may alternatively be represented by a period of time. In some other implementations, the service time may alternatively be periodic. In this case, the first request may further include a period of the service time. In some other implementations, the service time may alternatively be represented by an instant.

In some implementations, the service area information of the one or more network elements serving the first terminal device may be replaced with coverage information of the one or more network elements serving the first terminal device. In embodiments of this application, a manner of indicating the service area is not limited. In some implementations, the service area may include one or more of the following: a TAI, a cell identity, a longitude of the service area, or a latitude of the service area.

In some implementations, the first request includes identifier information of network elements in one or more satellites serving the first terminal device, or the first request includes identifier information of a network element serving the first terminal device in one or more satellites.

In embodiments of this application, the identifier information of the foregoing network element is not limited. In an example in which the network element is an access network device, the identifier information of the network element may include an identifier of the access network device. In an example in which the network element is an AMF, the identifier information of the network element may include an AMF identifier. In an example in which the network element includes an SMF, the identifier information of the network element may include an identifier of the SMF.

For example, the first request is used to indicate a time for communication between the first terminal device and the second terminal device, so that the first satellite is determined based on the time, to avoid a case that communication between the first terminal device and the second terminal device cannot be performed by using the first satellite caused when a time in which the selected first satellite serves the second terminal device and a time for communication between the first terminal device and the second terminal device are staggered, thereby improving properness of selecting the first satellite.

The foregoing describes the first request in embodiments of this application, and the following describes a transmission manner of the first request in embodiments of this application. In some scenarios, the second network element may directly transmit the first request to the first network element. A scenario in which the solution is applicable is similar to the foregoing scenario in which the first network element directly transmits the first information to the second network element. For details, reference may be made to the foregoing description.

In some other implementations, the step S320 may include: transmitting, by the second network element, the first request to the first network element by using a fourth network element. The fourth network element may include a network element having a network repository function and/or a network element serving the first terminal device.

In some scenarios, the fourth network element may be the same as the third network element, that is, a transmission manner of the first information corresponds to a transmission manner of the first request. The following is described with reference to FIG. 5. Certainly, in embodiments of this application, the fourth network element may be different from the third network element. In this case, a transmission manner of the first information does not correspond to a transmission manner of the first request.

It should be understood that, for the network element having the network repository function, reference may be made to the network element having the repository function described in the third network element. In addition, for the network element serving the first terminal device, reference may be made to the network element serving the first terminal device in the third network element. For brevity, details are not described herein again.

The foregoing describes a transmission manner of the first information and/or the first request in embodiments of this application. The following describes a solution for determining a first satellite in embodiments of this application with reference to Example 1 to Example 4.

**Example 1:** The first satellite is determined based on location information of the second terminal device and a service range of the first satellite.

In some implementations, the first network element includes an access and mobility management network element, and the service range of the first satellite is determined by the first network element based on a tracking area broadcast by an access network device on the first satellite.

For example, it is assumed that the first network element includes an access and mobility management network element (for example, an AMF or an MME), the first request carries the location information of the second terminal device, and an access network device is deployed on a satellite, while the access and mobility management network element is located on the ground. The access and mobility management network element may acquire corresponding tracking areas from access network devices deployed on a plurality of satellites. Then, the access and mobility management network element may match the location information of the second terminal device with the plurality of tracking areas to determine a first tracking area. The first tracking area matches the location information of the second terminal device, or the first tracking area includes the location information of the second terminal device. Then, a satellite corresponding to the first tracking area is the first satellite.

In embodiments of this application, a manner of obtaining a tracking area is not limited. In some implementations, the access network device deployed on the satellite may broadcast the access network device. Correspondingly, the access and mobility management network element may obtain a tracking area by broadcasting the access network device. In some other implementations, the access network device deployed on the satellite may actively report a tracking area. For example, after being powered on, the access network device deployed on the satellite may actively transmit the tracking area to the access and mobility management network element. In some other implementations, the access and mobility management network element may subscribe to a tracking area from the access network device.

In embodiments of this application, content that may be obtained by the access and mobility management network element from the access network device is not limited. In some implementations, the access and mobility management network element may obtain a tracking area code (tracking area code, TAC) from the access network device. In some other implementations, the access and mobility management network element may obtain a correspondence between a tracking area and a time from the access network device. Because the satellite is moving, a tracking area corresponding to the satellite is variable. Therefore, a tracking area corresponding to the satellite at a specific time may be indicated by using the correspondence.

In embodiments of this application, if the access and mobility management network element obtains the correspondence from the access network device, after determining the first satellite, the access and mobility management network element may further determine a service time of the first satellite based on the correspondence, thereby improving properness of selecting the first satellite.

In some implementations, the location information of the second terminal device is determined based on context information of the second terminal device stored in the first network element.

For example, it is assumed that the first network element includes an access and mobility management network element (for example, an AMF or an MME), the first request carries identifier information of the second terminal device, and the access network device is deployed on a satellite, while the access and mobility management network element is located on the ground. In this case, the access and mobility management network element may query a context of the second terminal device based on the identifier information of the second terminal device to determine the location information of the second terminal device. The access network device generally broadcasts a tracking area. Correspondingly, the access and mobility management network element may acquire tracking areas broadcast by a plurality of access network devices. Then, the access and mobility management network element may match the location information of the second terminal device with the plurality of tracking areas to determine a first tracking area. The first tracking area matches the location information of the second terminal device, or the first tracking area includes the location information of the second terminal device. Then, a satellite corresponding to the first tracking area is the first satellite.

It should be noted that the access and mobility management network element (for example, the AMF or the MME) may be determined based on the location information of the second terminal device. The location information of the second terminal device may include one or more of the following: a registration area, a TAI, a cell identifier, or an area of interest (area of interest, Aol).

In some other implementations, the first network element is determined by a network element serving the first terminal device by using a network element having a network repository function.

In some implementations, the network element having the network repository function (also referred to as a "network repository function network element") stores one or more of the following information: satellite ephemeris information of the first satellite; context information of the second terminal device; service area information of the first satellite; or tracking area information transmitted by the access network device on the first satellite, which helps find out a satellite serving the second terminal device.

For example, it is assumed that an access network device and an access and mobility management network element (for example, an AMF or an MME) are deployed on a satellite. In this case, information about a satellite stored in the access and mobility management network element and information about a terminal device may be relatively limited, and a satellite serving the second terminal device may not be found. Therefore, in this scenario, the first satellite serving the second terminal device may be determined by using a network element having a network repository function. Correspondingly, tracking areas broadcast by the access network device on a plurality of satellites may be stored on the network element having the network repository function. The network element having the network repository function may match the location information of the second terminal device with the plurality of tracking areas to determine a first tracking area. The first tracking area matches the location information of the second terminal device, or the first tracking area includes the location information of the second terminal device. Then, a satellite corresponding to the first tracking area is the first satellite.

In embodiments of this application, the location information of the second terminal device may be carried in the first request. Alternatively, the first request may carry the identifier information of the second terminal device. Correspondingly, the network element having the network repository function may determine the context information of the second terminal device based on the identifier information of the second terminal device, and determine the location information of the second terminal device based on the context information of the second terminal device.

In embodiments of this application, a second network element is not limited. The second network element may include one of the following: the first terminal device, an access network device, or an application server (for example, an IMS server).

In embodiments of this application, a scenario to which Example 1 is applicable is not limited. In some implementations, the scenario may include: querying, by the second network element, the satellite serving the second terminal device from the access and mobility management function (namely, the first network element) based on the location information of the second terminal device.

In some other implementations, the scenario may include transmitting to-be-transmitted data by using an inter-satellite link. For example, an access network device on a satellite cannot maintain a connection to the second terminal device due to mobility of the satellite. In this case, a next satellite serving the second terminal device is required to be found, so that information associated with the second terminal device may be delivered to the second terminal device by using a new satellite by using an inter-satellite link.

In some other implementations, the scenario may include a satellite switching procedure. For example, an access network device on a satellite cannot maintain a connection to the second terminal device due to mobility of the satellite. In this case, a next satellite (also referred to as a target satellite) serving the second terminal device is required to be found, so that the first terminal device may initiate a switching procedure and switch to an access network device on the target satellite, to communicate with the second terminal device subsequently by using the target satellite.

**Example 2:** The first satellite is a satellite in which a user plane network element associated with the second terminal device is located, and the user plane network element associated with the second terminal device is determined based on address information of the second terminal device.

In embodiments of this application, a user plane network element is not limited. For example, the user plane network element may include one or more of the following: an SMF, an MME, an SGW, or a PGW.

For example, the first network element may find out, based on the address information of the second terminal device, a user plane network element that serves the second terminal device, and then determine that a satellite on which the user plane network element is deployed is the first satellite.

In embodiments of this application, the second network element may include one of the following: the second terminal device, an access network device, or an application server (for example, an IMS server). In addition, the first network element may include a user plane network element related to session management. For example, the first network element may include one of the following: an SMF, an MME, a UPF, an SGW, or a PGW.

In embodiments of this application, a scenario to which Example 2 is applicable is not limited. In some implementations, the scenario includes: in a case that an IP address of the second terminal device is determined, a user plane network element (namely, the first network element) that manages allocation of an IP address may determine a corresponding PDU session based on the IP address of the second terminal device, and determine, based on the PDU session, that a satellite corresponding to the PDU session is the first satellite, where the satellite may be a satellite that carries data transmission in the PDU session.

**Example 3:** The first network element is an access network device, and if the second terminal device is located in a service range of the access network device, the first satellite is a satellite corresponding to a first access network device.

For example, if the first network element acquires location information of the second terminal device, the first network element may determine, based on the location information of the second terminal device, whether the second terminal device is located in a service range of the first network element. The second terminal device may be carried in the first request.

For another example, if the first network element acquires target area information, the first network element may determine, based on the target area information, whether a target area indicated by the target area information matches the service range of the first network element, where one or more terminal devices in the target area indicated by the target area information are the second terminal device. In addition, the target area may be carried in the first request.

In embodiments of this application, the second network element may be one or more of the following: the first terminal device, a core network element serving the first terminal device, or an access network device serving the first terminal device.

In embodiments of this application, a scenario to which Example 3 is applicable is not limited. In some implementations, the scenario may include that an access network device (namely, the first network element) maintains an association relationship between a terminal device and a satellite. Correspondingly, another network element (for example, the second network element) may directly determine, from the access network device, whether the second terminal device is in a service area of the access network device. In some other implementations, the scenario may include that an access network device (namely, the first network element) may store context information of a terminal device in coverage of the access network device. Correspondingly, another network element (for example, the second network element) may directly determine, from the access network device, whether the second terminal device is in a service area of the access network device.

**Example 4:** The first satellite is determined by the first network element based on pre-stored information about the second terminal device and/or information about the first satellite.

In some implementations, the information about the second terminal device may include one or more of the following: identifier information of the second terminal device, address information of the second terminal device, or location information of the second terminal device. In some other implementations, the information about the second terminal device may be context information of the second terminal device.

In some implementations, the information about the first satellite may include identifier information of the first satellite, ephemeris information of the first satellite, or service range information of the first satellite.

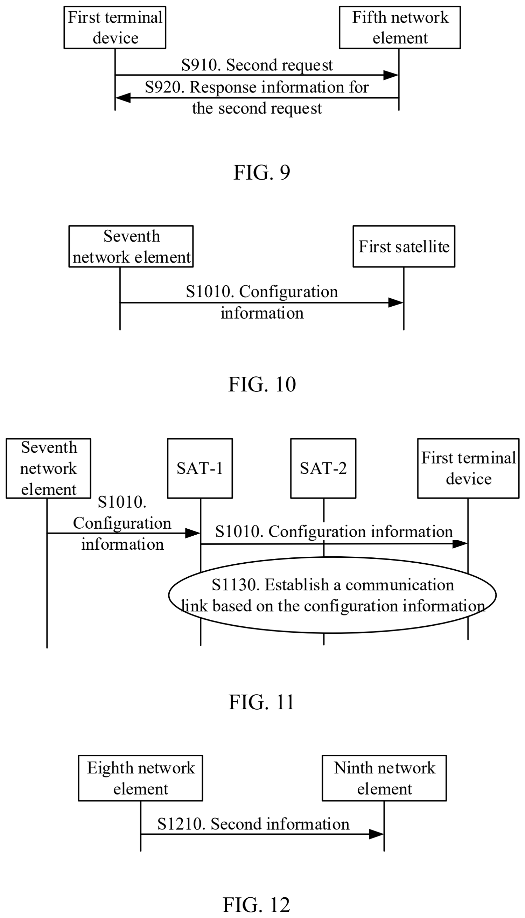

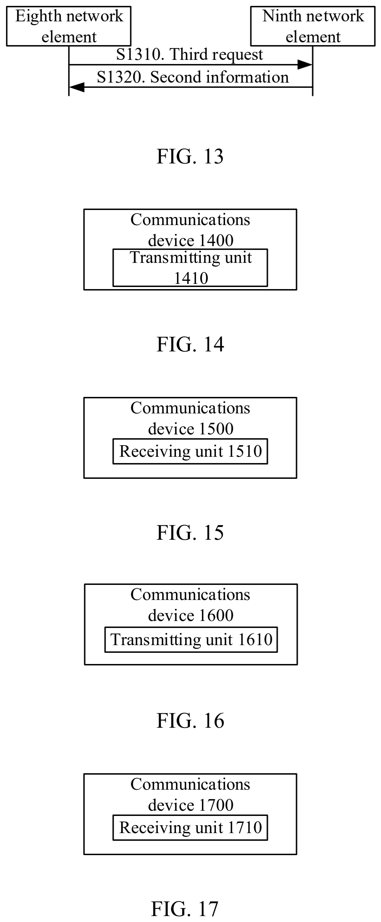

In embodiments of this application, the pre-stored information about the second terminal device and/or information about the first satellite may be collected by the first network element from another network element. The following is described with reference to the methods illustrated in FIG. 12 and FIG. 13. Certainly, in embodiments of this application, the information about the second terminal device and/or information about the first satellite may be pre-configured by the first network element.

In some implementations, the first network element may be a network element having a network repository function, or the first network element may be a network element (for example, an NWDAF) having an artificial intelligence (artificial intelligence, AI) or statistical function.

For example, the first network element stores information about a plurality of satellites and information about a plurality of terminal devices, and the first request received by the first network element carries identifier information of the second terminal device and a time for communication between the first terminal device and the second terminal device by using the first satellite. In this case, the first network element may determine the location information of the second terminal device from the information about the plurality of terminal devices based on the identifier information of the second terminal device. Then, the first network element may determine, from the information about the plurality of satellites, that a satellite corresponding to a service range that matches the location information of the second terminal device in the time is the first satellite.

In embodiments of this application, a scenario to which Example 4 is applicable is not limited. In some implementations, the scenario may include a scenario in which the first network element is required to collect information about a satellite and/or a terminal device in a network to execute an AI task such as model inference. In some other implementations, the scenario may include a scenario in which the first network element is required to collect information about a satellite and/or a terminal device in a network to execute an AI task such as model prediction. In some other implementations, the scenario may include a scenario in which the first network element is required to collect information about a satellite and information about a terminal device, to determine an association relationship between the satellite and the terminal device, and execute an AI task such as model prediction based on the association relationship. The association relationship may be used to indicate one or more of the following: whether a terminal device and/or a target area associated with a terminal device is in a service range of the satellite; when and where the satellite may provide a service to a terminal device and/or a target area; or duration in which the satellite may provide a service for a terminal device and/or a target area.

For ease of understanding, the wireless communication method in embodiments of this application is described below with reference to FIG. 4 and FIG. 5.

Referring to FIG. 4, it is assumed that UE-Satellite-UE communication may be initiated by a first terminal device, and the first terminal device communicates with a second terminal device in a target area. Steps in FIG. 4 include step S410 and step S420.

In the step S410, the first terminal device transmits a first request to a first network element, where the first request is used to request information about a satellite serving the second terminal device.

In some implementations, the first request may include information related to the second terminal device, namely, target area information, where the target area information is used to indicate the target area. For details, reference may be made to the foregoing description.

In some implementations, the first request includes information related to the first terminal device. For example, the first request may include one or more of the following: identifier information of the first terminal device, address information of the first terminal device, identifier information of a satellite serving the first terminal device, ephemeris information of a satellite serving the first terminal device, or identifier information of a network element serving the first terminal device. For related descriptions of the foregoing information, reference may be made to the foregoing description.

In some implementations, the first request is further used to indicate a time for UE-Satellite-UE communication between the first terminal device and the second terminal device.

In the step S420, the first network element transmits first information (or a response message for the first request) to the first terminal device.

In some implementations, the first information may include one or more of the following: identifier information of all second terminal devices in the target area; identifier information of one or more first satellites serving the second terminal device; identifier information of a network element on one or more first satellites serving the second terminal device; or a time in which one or more satellites serve the second terminal device. For related descriptions of the foregoing information, reference may be made to the foregoing description.

Referring to FIG. 5, it is assumed that an access network device and an access and mobility management function serving a first terminal device are deployed on a satellite SAT-2. In this case, the access and mobility management network element may store only related information of a terminal device (for example, a context of the terminal device) in an area covered by a satellite in which the access and mobility management network element is located. In addition, related information of the second terminal device does not match the related information of the terminal device stored in the mobility management network element. In this case, the access and mobility management network element that manages the second terminal device is required to be found by using a network repository function network element deployed on the ground or on a satellite, so as to obtain a first satellite (STA-1) that serves the second terminal device. The access and mobility management network element that manages the second terminal device and the access network device are deployed on the STA-1. The following describes with reference to step S510 to step S560. It should be noted that for related descriptions of the first request and the first information, reference may be made to the foregoing description. For brevity, details are not described below.

In step S510, the first terminal device transmits a first request to the SAT-2, to request the first satellite serving the second terminal device.

In step S520, the SAT-2 transmits the first request to the network repository function network element.

In some implementations, if the access and mobility management network element in the SAT-2 cannot determine a network element that serves the second terminal device, the SAT-2 transmits the first request to the network repository function network element.

In step S530, the network repository function network element transmits the first request to the SAT-1.

In some implementations, the network repository function network element may find out, based on information such as stored satellite ephemeris information, a terminal device context, or a user subscription message, the SAT-1 that serves the second terminal device, and forward the first request to the SAT-1.

In step S540, in response to receiving the first request, the SAT-1 transmits the first information to the network repository function network element.

In step S550, the network repository function network element transmits the first information to the SAT-2.

In step S550, the SAT-2 transmits the first information to the first terminal device.

### Embodiment 2

In some scenarios, a first terminal device may communicate with a second terminal device by using one or more satellites. Currently, a first terminal device that is allowed to communicate with the second terminal device is not specified in any communication protocols, which may cause low security of communication between the first terminal device and the second terminal device.

To solve the foregoing problem, an embodiment of this application provides a wireless communication method. In this method, the first terminal device may request, by using a second request, a fifth network element to authorize the first terminal device to perform communication with the second terminal device by using a satellite, thereby improving security of communication between the first terminal device and the second terminal device by using the satellite.

The following describes a wireless communication method in an embodiment of this application with reference to FIG. 6. FIG. 6 is a schematic diagram of a wireless communication method in an embodiment of this application.

In step S610, a first terminal device transmits a second request to a fifth network element, where the second request is used to request authorizing the first terminal device to perform communication with a second terminal device by using a satellite. Therefore, the second request may also be referred to as an "authorization request".

In embodiments of this application, the first terminal device may be a terminal device participating in UE-Satellite-UE communication. For example, the first terminal device may be a UE-Satellite-UE communication initiator. For another example, the first terminal device may be a UE-Satellite-UE communication receiver.

In some implementations, the fifth network element may be the second terminal device. In this case, the second terminal device may determine whether to grant authorization to the first terminal device. In embodiments of this application, the second terminal device determines whether to authorize communication with the first terminal device by using the satellite, which is beneficial for improving authorization accuracy. In this case, the first terminal device may indirectly communicate with the second terminal device. For example, the first terminal device may transmit the second request to the second terminal device by using a network element 1. The network element 1 may be configured to provide a service for the first terminal device and the second terminal device. The following is described with reference to FIG. 7. For another example, the first terminal device may transmit the second request to the second terminal device by using a plurality of network elements, where the plurality of network elements may include a network element (for example, an access network device) serving the first terminal device, a network element (for example, an access network device) serving the second terminal device, and an access and mobility management function, which are described below with reference to FIG. 8.

In some other implementations, the fifth network element may be a network element serving the first terminal device and the second terminal device. In this case, after receiving the second request, the fifth network element may forward the second request to the second terminal device. The following is described with reference to FIG. 7.

In some other implementations, the fifth network element may be a network element serving the second terminal device. In this case, the fifth network element may assist the second terminal device in determining whether authorization for the first terminal device is granted. For example, when the first terminal device requests to authorize communication with a terminal device in a target area, the fifth network element may assist the terminal device in the target area in determining whether to authorize the first terminal device to perform communication. The following is described with reference to FIG. 9. In embodiments of this application, the fifth network element assists the second terminal device in determining whether to authorize communication with the first terminal device by using a satellite, which is beneficial for reducing complexity of determining, by the second terminal device, whether to authorize the communication.

In embodiments of this application, the fifth network element may include one or more of the following: an access network device, an MME, an AMF, an SMF, an SGW, a PGW, an HSS, an AUSF, a UDM, an NWDAF, an IMS server, or an AF. In addition, some or all of the fifth network elements may be deployed on the ground, or may be deployed on one or more satellites.

In some other implementations, the fifth network element may be a network element serving the first terminal device. In this case, the fifth network element does not provide a service for the second terminal device. In this case, the fifth network element transmits the second request to a sixth network element. Correspondingly, the sixth network element may provide a service for the second terminal device. Then, the sixth network element may forward the second request to the second terminal device. The following is described with reference to FIG. 8.

The foregoing describes a transmission manner of the second request in embodiments of this application. The following describes the second request in an embodiment of this application.

In some implementations, the second request includes one or more of the following: information associated with the first terminal device; information associated with the second terminal device; information for indicating that communication between the first terminal device and the second terminal device is performed by using a satellite; or information associated with a first service, where the first service is a service communicated between the first terminal device and the second terminal device by using a satellite.

For example, the second request includes the information associated with the first terminal device, in embodiments of this application, the second request carries the information associated with the first terminal device, which helps the fifth network element or the second terminal device identify the first terminal device, so as to determine whether to authorize the communication, thereby improving authorization accuracy.

In some implementations, the information associated with the first terminal device includes one or more of the following: identifier information of the first terminal device; address information of the first terminal device; identifier information of one or more satellites serving the first terminal device; or identifier information of one or more network elements serving the first terminal device.

In some implementations, the identifier information of the first terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations the address information of the first terminal device may include an IP address of the first terminal device or a MAC address of the first terminal device.

In some implementations, the identifier information of the one or more satellites serving the first terminal device may include an identifier information of each satellite or identifier information of a group in which the one or more satellites are located. The identifier information of the group in which the one or more satellites are located may include identifier information of a satellite group.

In some implementations, the second request includes identifier information of network elements in one or more satellites serving the first terminal device, or the second request includes identifier information of a network element serving the first terminal device in one or more satellites.

In embodiments of this application, the identifier information of the foregoing network element is not limited. In an example in which the network element is an access network device, the identifier information of the network element may include an identifier of the access network device. In an example in which the network element is an AMF, the identifier information of the network element may include an AMF identifier. In an example in which the network element includes an SMF, the identifier information of the network element may include an identifier of the SMF.

For example, the second request includes the information associated with the second terminal device, in embodiments of this application, the second request carries the information associated with the second terminal device, which helps identify the second terminal device, so as to determine that to-be-authorized communication is communication between the first terminal device and which second terminal device.

In some implementations, the information associated with the second terminal device includes one or more of the following: identification information of one or more second terminal devices; address information of one or more second terminal devices; identifier information of a terminal group in which the second terminal device is located; or target area information.

In some implementations, the identifier information of the second terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations, the address information of the second terminal device may include, for example, IP address information of the second terminal device or MAC address of the second terminal device.

In some implementations, the identifier information of the terminal group in which the second terminal device is located may include, for example, a group identifier of the terminal group in which the second terminal device is located.

In some implementations, the target area indicated by the target area information is used to determine the second terminal device. For example, one or more terminal devices in the target area are all the second terminal device. It is assumed that the second request carries the target area information but does not carry the identifier information of the second terminal device. In this case, it may be understood that the second request requests authorization of communication with all terminal devices in the target area, that is, all terminal devices in the target area are the second terminal device.

For another example, the target area is an area in which the second terminal device is located. In this case, the target area may be replaced with location information of the second terminal device.

In embodiments of this application, the target area information is not specifically limited. In some implementations, the target area information may include one or more of the following: a TAI, a cell identity, a longitude of the target area, or a latitude of the target area. In some other implementations, if the target area is used to indicate the location information of the second terminal device, the location information of the second terminal device may include travel track information of the second terminal device, or the location information of the second terminal device may be information about a location where the second terminal device is located.

The second request includes information for indicating that communication between the first terminal device and the second terminal device is performed by using a satellite, or the second request includes indication information indicating that the first terminal device communicates with the second terminal device by using a satellite. Therefore, the indication information may also be referred to as a "UE-satellite-UE indication".

For example, the second request includes the information associated with the first service, in embodiments of this application, the second request carries the information associated with the first service, which helps identify the first service for transmission in to-be-authorized communication, thereby improving accuracy of authorizing the communication.

In some implementations, the information associated with the first service includes one or more of the following: information for indicating duration of the first service; or information for indicating a service type of the first service.

In embodiments of this application, the information for indicating duration of the first service may be used to determine a time in which the satellite serves the second terminal device, which helps improve accuracy of determining whether to authorize the communication.

In embodiments of this application, a manner of indicating the duration is not limited. In some implementations, the second request may include one or more of the following: a start time of the duration, an end time of the duration, or a time length of the duration.

For example, the second request indicates only the start time of the duration. In this case, the time length of the duration may be predefined or pre-configured. In this case, the first device may determine the duration based on the start time and the time length.

For another example, the second request indicates only the end time of the duration. In this case, the time length of the duration may be predefined or pre-configured. In this case, the first device may determine the duration based on the end time and the time length.

In embodiments of this application, an implementation of the duration is not limited. In some implementations, the duration may be represented by a time window. In some other implementations, the duration may alternatively be represented by a period of time.

In some implementations, the first service may include a service transmitted by using UE-Satellite-UE communication. Therefore, the first service may alternatively be referred to as a "UE-Satellite-UE communication service".

In some implementations, if the first service is a service transmitted by using the UE-Satellite-UE communication, the information for indicating a service type of the first service may be used to indicate that the service type is a UE-Satellite-UE service type. Certainly, in embodiments of this application, the service type may include a live service, an emergency message service, a voice service, or the like.

Certainly, in embodiments of this application, the information associated with the first service may further include other information related to the first service, for example, service description information of the first service, traffic information of the first service, a delay of the first service, a bit rate of the first service, an IP 5-tuple of the first service, a priority of the first service, or a priority of a terminal device that participates in transmitting the first service (for example, a priority of the first terminal device and/or a priority of the second terminal device).

The foregoing describes the second request in embodiments of this application, and the following describes a transmission manner of the second request in embodiments of this application.

In some scenarios, the fifth network element may include a network element serving the second terminal device. Correspondingly, the second request may be transmitted by the fifth network element to the second terminal device.

In some implementations, the second terminal device is determined by the fifth network element based on identifier information of the second terminal device. The identifier of the second terminal device may be carried in the second request.

For example, when the fifth network element is an access network device, the access network device may determine, based on an RNTI of the second terminal device, whether the second terminal device is in a service range of the fifth network element.

For another example, when the fifth network element is an access network device, the access network device may determine, based on a TA in which the second terminal device is located, whether the second terminal device is in a service range of the fifth network element.

In some implementations, the second terminal device is determined by the fifth network element based on the location information of the second terminal device. The location information of the second terminal device may be carried in the second request. For example, the second request may carry the target area information. Alternatively, the location information of the second terminal device is determined based on the identifier information of the second terminal device. For example, the fifth network element may determine context information of the second terminal device based on the identifier information of the second terminal device. Correspondingly, the fifth network element may determine the location information of the second terminal device based on the context information of the second terminal device.

For example, when the fifth network element includes an access network device and an access and mobility management network element, the fifth network element may query whether the context information of the second terminal device is included in locally stored terminal device context information. If the locally stored terminal device context information of the fifth network element includes the context information of the second terminal device, the fifth network element may determine that the second terminal device is in a service range of the fifth network element.

In some implementations, the fifth network element is not a network element serving the second terminal device, the second request is transmitted by the fifth network element to a sixth network element, and the sixth network element serves the second terminal device.

In embodiments of this application, the fifth network element may be an access network device (also referred to as an "access network device-1") serving the first terminal device. In addition, in embodiments of this application, the sixth network element may include an access network device (also referred to as an "access network device-2") serving the second terminal device.

In some implementations, the sixth network element may further include an access and mobility management network element. The network element may be configured to determine an access network device serving the second terminal device. Correspondingly, the access and mobility management network element may receive the second request from the fifth network element, and forward the second request to the sixth network element.

In embodiments of this application, if the fifth network element and the sixth network element are access network devices, the fifth network element and the sixth network element meet one of the following requirements: the fifth network element and the sixth network element are deployed on different satellites; the fifth network element and the sixth network element are deployed on a same satellite; the fifth network element is deployed on a satellite, and the sixth network element is deployed on the ground; or the fifth network element is deployed on the ground, and the sixth network element is deployed on a satellite.

Alternatively, the access network device-1 and the access network device-2 are used for description. For example, the access network device-1 and the access network device-2 may be a same access network device deployed on a same satellite. For another example, the access network device-1 and the access network device-2 may be deployed on different satellites, respectively. For another example, one of the access network device-1 and the access network device-2 may be deployed on a satellite, and the other of the access network device-1 and the access network device-2 may be deployed on the ground.

In embodiments of this application, a location of the access and mobility management network element is not limited. For example, the access and mobility management network element may be deployed on a satellite. For another example, the access and mobility management network element may be deployed on the ground.

In some implementations, referring to FIG. 6, the foregoing method further includes step S620. In step S620, the fifth network element transmits response information to the second request to the first terminal device, where the response information to the second request is used to indicate that the second terminal device accepts or refuses to authorize the communication, or the response information to the second request is used to indicate that the second terminal device agrees to or refuses to authorize the communication. The communication includes communication performed between the first terminal device and the second terminal device by using a satellite. For example, the communication is "UE-satellite-UE communication".

In some implementations, in a case that the response information to the second request is used to indicate that the second terminal device refuses to authorize the communication, a response message to the second request is used to indicate a reason why the first terminal device refuses to authorize the communication, which helps the first terminal device determine, based on the reason, whether to initiate the second request again, so as to improve efficiency of transmitting the second request.

In embodiments of this application, a reason why the second terminal device refuses to authorize communication is not limited. For example, the reason may include that a satellite serving the second terminal device leaves in a communication (UE-satellite-UE communication) time requested by the first terminal device. For another example, the reason may include that a satellite serving the second terminal device leaves due to a relatively long authorization reason. For another example, the reason may include that the second terminal device is located in a restricted area of a satellite communication service. For another example, the reason may include that the first terminal device is located in a restricted area of a satellite communication service. For another example, the reason may include that a first terminal is not in an authorization list of the second terminal, that is, the first terminal does not have permission to perform UE-Satellite-UE communication with the second terminal. For another example, the reason may include that current load for communication of the second terminal is excessively high, and there is no enough resource to perform UE-Satellite-UE communication with the first terminal device. For another example, the reason may include that the second terminal device does not support UE-Satellite-UE communication. For another example, the reason may include that the second terminal is to leave coverage of a current satellite. For another example, the reason may include that the second terminal is to enter a state such as a power saving mode, a sleep mode, a flight mode, or a power off state.

The foregoing describes response information to the second request in embodiments of this application, and the following describes a manner of transmitting the response information to the second request in embodiments of this application. In some implementations, a transmission manner of the response information to the second request corresponds to a transmission manner of the second request.

In some implementations, the response information to the second request is transmitted by the second terminal device to the fifth network element. The fifth network element may include a network element serving the second terminal device. For details, reference may be made to the foregoing description.

In some other implementations, the response information to the second request may be transmitted to the fifth network element by a sixth network element serving the second terminal device, where the sixth network element is configured to provide a service for the second terminal device, and the fifth network element is configured to provide a service for the first terminal device. For details, reference may be made to the foregoing related descriptions of the fifth network element and the sixth network element.

The foregoing describes a manner of transmitting the response information to the second request in embodiments of this application, and the following describes a manner of determining whether to agree or refuse authorization in embodiments of this application.

In some implementations, whether to agree to or refuse to authorize the communication is determined by the fifth network element.

In some implementations, whether to agree to or refuse to authorize the communication is determined based on one or more of the following information: resource occupation status of the second terminal device; a priority of the service transmitted based on the communication; or a priority of the first terminal device.

In some implementations, the resource occupation status of the second terminal device may include a resource occupation rate of the second terminal device. Generally, if the resource occupation rate of the second terminal device is higher than a threshold, it indicates that the second terminal device is in a relatively busy state, and thus authorization of the communication may be refused, which helps prevent the communication from affecting other communication in which the second terminal device already participates. On the contrary, if the resource occupation rate of the second terminal device is less than the threshold, it indicates that the second terminal device is in a relatively idle state, and thus authorization of the communication may be agreed.

In some implementations, if the priority of the service transmitted based on the communication is higher than a threshold, it indicates that the service is relatively urgent, and thus authorization of the communication may be agreed, which helps meet a transmission requirement of the service that is relatively urgent. On the contrary, if the priority of the service transmitted based on the communication is higher than the threshold, it indicates that the service is a common service, and thus authorization of the communication may be refused, which helps avoid a case in which the service affects transmission of a more urgent service in the second terminal device.

In some implementations, if the priority of the first terminal device is higher than a threshold, it indicates that the priority of the first terminal device is relatively high, and thus authorization of the communication may be agreed, which helps preferentially meet a requirement for communicating with the first terminal device. On the contrary, if the priority of the first terminal device is lower than the threshold, it indicates that the priority of the first terminal device is relatively low, and thus authorization of the communication may be refused, which helps prevent communication with a terminal device having a higher priority from being affected by communication with the first terminal device.

In embodiments of this application, the fifth network element is not limited. For example, the fifth network element may be an access network device, and the fifth network element serves the first terminal device and the second terminal device. In this case, the fifth network element may obtain the foregoing information, so as to determine whether to agree to or refuse to authorize the communication.

In some implementations, whether to agree to or refuse to authorize the communication is determined based on one or more of the following information: location information of the first terminal device; or location information of the second terminal device.

In some implementations, the location information of the first terminal device may include whether the first terminal device is located in a restricted area of satellite communication.

In some implementations, the location information of the second terminal device may include whether the second terminal device is located in a restricted area of satellite communication.

In embodiments of this application, the fifth network element is an access and mobility management network element, for example, an MME or an AMF. Correspondingly, the first terminal device may communicate with the access and mobility management network element by using an access network device.

In some implementations, whether to agree to or refuse to authorize the communication is determined based on one or more of the following information: identity verification information of the first terminal device; or subscription information of the first terminal device.

In some implementations, the fifth network element may determine, based on the identity verification information of the first terminal device, whether to agree to or refuse to authorize the communication. For example, if the identity verification information of the first terminal device indicates that the first terminal device is a legitimate terminal device, the fifth network element may confirm and agree to authorize the communication. For another example, if the identity verification information of the first terminal device indicates that the first terminal device is an illegitimate terminal device, the fifth network element may confirm and refuse to authorize the communication.

In some implementations, the fifth network element may determine, based on the subscription information of the first terminal device, whether to agree to or refuse to authorize the communication. For example, if the subscription information of the first terminal device indicates that the first terminal device supports the communication, the fifth network element may confirm and agree to authorize the communication. For another example, if the subscription information of the first terminal device indicates that the first terminal device does not support the communication, the fifth network element may confirm and refuse to authorize the communication.

In embodiments of this application, the fifth network element is not limited. In some implementations, the fifth network element is an authentication server function network element. For example, the fifth network element may be one or more of the following: an AUSF, an HSS, or a UDM. Correspondingly, the first terminal device may communicate with the fifth network element by using a core network element such as an access network device or an access and mobility management function.

For ease of understanding, the following describes a method for requesting authorization for a first terminal device to perform UE-satellite-UE communication according to an embodiment of this application with reference to FIG. 7 to FIG. 9. It should be understood that, for a second request and response information to the second request in FIG. 7 to FIG. 9, reference may be made to the foregoing description. FIG. 7 mainly illustrates execution steps of a method procedure in an embodiment of this application.

Referring to FIG. 7, it is assumed that the first terminal device and a first terminal device are in a service range of a same satellite SAT-1, and a fifth network element is deployed on the SAT-1. The fifth network element includes an access network device and an access and mobility management network element. The method illustrated in FIG. 7 includes step S710 to step S740. It should be understood that, for a second request and response information to the second request in FIG. 7, reference may be made to the foregoing description. FIG. 7 mainly illustrates execution steps of a method procedure in an embodiment of this application.

In step S710, the first terminal device transmits a second request to the fifth network element, where the second request is used to request authorization of UE-satellite-UE communication performed between the first terminal device and the second terminal device.

In step S720, if the fifth network element confirms that the second terminal device is in a service range of the SAT-1, the fifth network element transmits the second request to the second terminal device.

In step S730, the second terminal device transmits response information to the second request to the fifth network element.

In some implementations, if the response information indicates that the second terminal device agrees to grant the authorization, the authorization succeeds. On the contrary, if the response information indicates that the second terminal device refuses the authorization, the authorization fails. In this case, the response message may include authorization failure cause information.

In step S740, the fifth network element transmits the response information to the second request to the first terminal device.

Referring to FIG. 8, it is assumed that an access network device and an access and mobility management network element are deployed on different satellites, an access network device 1 serving a first terminal device is located on one satellite (also referred to as SAT-1), and an access network device 2 serving a second terminal device is located on another satellite (also referred to as SAT-2). The method shown in FIG. 8 includes step S810 to step S880.

In step S810, the first terminal device transmits a second request to the access network device 1, where the second request is used to request authorization of UE-satellite-UE communication performed between the first terminal device and the second terminal device.

In step S820, if the access network device 1 determines that the second terminal device is not in a service range of the SAT-1, the access network device 1 transmits the second request to the access and mobility management network element.

In step S830, if the access and mobility management network element determines that the access network device 2 serves the second terminal device, the access and mobility management network element transmits the second request to the access network device 2.

In step S840, the access network device 2 transmits the second request to the second terminal device.

In step S850, in response to the second request, the second terminal device transmits response information to the second request to the access network device 2.

In some implementations, if the response information indicates that the second terminal device agrees to grant the authorization, the authorization succeeds. On the contrary, if the response information indicates that the second terminal device refuses the authorization, the authorization fails. In this case, the response message may include authorization failure cause information.

In step S860, the access network device 2 transmits response information to the second request to the access and mobility management network element.

In step S870, the access and mobility management network element transmits the response information to the second request to the access network device 1.

In step S880, the access network device 1 transmits the response information to the second request to the first terminal device.

Referring to FIG. 9, it is assumed that the first terminal device requests authorization of UE-satellite-UE communication with a terminal device in a target area. In this case, a fifth network element may determine whether to authorize UE-satellite-UE communication performed between the first terminal device and a second terminal device. The method shown in FIG. 9 may include step S910 and step S920.

In step S910, the first terminal device transmits a second request to the fifth network element, to request authorization of UE-satellite-UE communication with the terminal device in the target area.

In step S920, the fifth network element transmits response information to the second request to the first terminal device.

In some implementations, if the response information indicates that the second terminal device agrees to grant the authorization, the authorization succeeds. On the contrary, if the response information indicates that the second terminal device refuses the authorization, the authorization fails. In this case, the response message may include authorization failure cause information. In addition, for agreeing or refusing of authorization by the fifth network element, reference may be made to the foregoing description.

### Embodiment 3

In some scenarios, a first terminal device may perform communication with a second terminal device by using one or more satellites (for example, a first satellite and/or a second satellite), and the communication is also referred to as UE-Satellite-UE communication. However, how to determine a communication link to be used in a UE-Satellite-UE communication scenario is currently not specified in a communication protocol, which may cause a UE-Satellite-UE communication failure.

To solve the foregoing problem, a wireless communication method is provided. In this method, a seventh network element may transmit configuration information to a first satellite, to configure a first communication link and/or a second communication link for the first satellite. The first communication link and/or the second communication link may be used for communication between a first terminal device and a second terminal device. Therefore, the configuration information may also be referred to as "path configuration information".

The following describes the wireless communication method according to an embodiment of this application with reference to FIG. 10. Referring to FIG. 10, in step S1010, a seventh network element transmits configuration information to a first satellite.

In some implementations, the configuration information is used to configure one or more of the following: a first communication link used for communication between a target terminal device and the first satellite; or a second communication link used for communication between the first satellite and a second satellite.

In some implementations, at least one of the first communication link or the second communication link is used for communication between a first terminal device and a second terminal device, or at least one of the first communication link or the second communication link is used for communication performed between a first terminal device and a second terminal device by using a satellite.

In some implementations, the target terminal device includes the first terminal device and/or the second terminal device. Correspondingly, the first communication link may include a communication link between the first terminal device and the first satellite, and/or a communication link between the second terminal device and the first satellite.

In some scenarios, a satellite serving the first terminal device is the same as a satellite serving the second terminal device, that is, the first satellite may provide a service for both the first terminal device and the second terminal device. In this case, the communication link used for communication between the first terminal device and the second terminal device may include the communication link between the first terminal device and the first satellite and the communication link between the second terminal device and the first satellite.

In embodiments of this application, the scenario in which the first terminal device and the second terminal device communicate with each other by using a same satellite may be applicable to a scenario in which the first terminal device and the second terminal device are relatively close to each other. In this case, the first terminal device and the second terminal device may be in a service range of a same satellite.

In some other implementations, the second communication link may include the communication link between the first satellite and the second satellite. Therefore, the second communication link may also be referred to as an "inter-satellite link".

In some scenarios, a satellite serving the first terminal device is different from a satellite serving the second terminal device. In this case, the communication link used for communication between the first terminal device and the second terminal device may include an inter-satellite link. For example, if the first satellite serves the first terminal device and the second satellite serves the second terminal device, the communication link between the first terminal device and the second terminal device may include the inter-satellite link between the first satellite and the second satellite.

In embodiments of this application, the scenario in which the first terminal device and the second terminal device communicate with each other by using the inter-satellite link may be applicable to a scenario in which the first terminal device and the second terminal device are relatively far away each other. In this case, the first terminal device and the second terminal device may be in service ranges of different satellites.

In some implementations, the configuration information includes one or more of the following: a QoS parameter corresponding to the first communication link and/or the second communication link; an N4 rule corresponding to the first communication link; information for indicating a time in which one or more satellites serve the second terminal device; identifier information of a network element on the one or more satellites; or information for indicating that communication between the first terminal device and the second terminal device is performed by using a satellite.

In some implementations, the configuration information may include the quality of service (quality of service, QoS) parameter corresponding to the first communication link, which helps communication of the first communication link meet a service requirement. Correspondingly, the configuration information may include the QoS parameter corresponding to the second communication link, which helps communication of the second communication link meet a service requirement.

In some implementations, the configuration information may include the N4 rule corresponding to the first communication link. The N4 rule corresponding to the first communication link may be understood as an N4 rule of an N4 interface between a control plane network element (for example, a UPF) and a user plane network element (for example, an SMF) used in communication between the target terminal device and the first satellite. Correspondingly, the configuration information may include an N4 rule corresponding to the second communication link. The N4 rule corresponding to the second communication link may be understood as an N4 rule of an N4 interface between a control plane network element (for example, a UPF) and a user plane network element (for example, an SMF) used in communication between the first satellite and the second satellite.

In some implementations, the configuration information is used to indicate the information for indicating the time in which one or more satellites serve the second terminal device, and the time is also referred to as a "service time". Alternatively, the configuration information may include times in which respective ones of the one or more satellites serve the second terminal device. The time is carried in the configuration information, which helps the first satellite and/or the first terminal device determine an available time of a satellite to be connected.

In embodiments of this application, a manner of indicating the service time is not limited. In some implementations, the configuration information may include one or more of the following: a start time of the service time, an end time of the service time, or duration of the service time.

For example, the configuration information indicates only the start time of the service time. In this case, the duration of the service time may be predefined or pre-configured. In this case, a first device may determine the service time based on the start time and the duration.

For another example, the configuration information indicates only the end time of the service time. In this case, duration of the service time may be predefined or pre-configured. In this case, the first device may determine the service time based on the end time and the duration.

In embodiments of this application, an implementation manner of the service time is not limited. In some implementations, the service time may be represented by a time window. In some other implementations, the service time may alternatively be represented by a period of time. In some other implementations, the service time may alternatively be periodic. In this case, the configuration information may further include a period of the service time. In some other implementations, the service time may alternatively be represented by an instant.

In some implementations, the configuration information is used to indicate the identifier information of the network element on one or more satellites, and the identifier information of the network element on the satellites may include identifier information of a network element that may provide a service for the second terminal device on a satellite.

In some implementations, the one or more satellites are used for determining the second satellite serving the second terminal device.

In embodiments of this application, the identifier information of the network element is not limited. In an example in which an access network device is deployed on a satellite, identifier information of a network element on the satellite may include an access network device identifier. In an example in which an AMF is deployed on a satellite, identifier information of a network element on the satellite may include an AMF identifier. In an example in which an SMF is deployed on a satellite, identifier information of a network element on the satellite may include an SMF identifier.

In some implementations, the configuration information includes the information for indicating that communication between the first terminal device and the second terminal device is performed by using a satellite, or the configuration information includes information for indicating that the first terminal device communicates with the second terminal device by using a satellite, which helps determine that a communication link configured by using the configuration information is applicable to UE-satellite-UE communication. Therefore, the information may also be referred to as "UE-satellite-UE indication". Alternatively, the information is used to indicate that the configuration information is used for UE-satellite-UE communication.

In some implementations, the configuration information is forwarded by the first satellite to the first terminal device, or the method further includes: transmitting, by the seventh network element, the configuration information to the first terminal device.

In some implementations, the method further includes: establishing, by the first terminal device, a communication connection to the second satellite based on the configuration information, where the communication link is used for communication between the first terminal device and the second terminal device.

In embodiments of this application, the seventh network element is not limited. For example, the seventh network element may include one or more of the following: the first terminal device; the second terminal device; a session management network element; or a user plane network element.

In an example in which the seventh network element includes a terminal device (also referred to as a "terminal device 1") that initiates UE-Satellite-UE, the terminal device 1 may provide configuration information to the terminal device 2. In this case, it may be understood that the terminal device 1 determines a communication link of the UE-Satellite-UE, which helps simplify a process of determining the communication link.

In an example in which the seventh network element includes a session management network element, the seventh network element may be an MME or an SMF.

In an example in which the seventh network element includes a user plane network element, the seventh network element may be one of the following: a UPF, an SGW, or a PGW.

Certainly, in embodiments of this application, the seventh network element may further include an application server function network element. For example, the seventh network element includes an IMS server and/or an AF. Alternatively, the seventh network element is a new network element used for satellite-related service management. In this case, it may be understood that a network element on a network side determines the communication link of the UE-Satellite-UE, which helps improve properness of determining the communication link.

In embodiments of this application, an application scenario of the foregoing solution is not limited. For example, the solution may be used to establish a UE-Satellite-UE communication link for the first time. For another example, the solution may be used to update a UE-Satellite-UE communication link, where the update of the communication link may be caused by mobility of a terminal device. Certainly, in embodiments of this application, the update of the communication link may be caused by mobility of a satellite.

In some implementations, if network elements deployed on the first satellite and/or the second satellite only include an access network device, the first terminal device may communicate with the second terminal device only by using the access network device, that is, data transmitted by the first terminal device to the second terminal device is forwarded only by using the access network device.

In some other implementations, if network elements deployed on the first satellite and/or the second satellite include an access network device and a user plane network element, the first terminal device may establish a PDU session with a network element on the first satellite and/or the second satellite based on configuration information.

In some other implementations, if network elements deployed on the first satellite and/or the second satellite include an access network device and a session management network element, the first terminal device may establish a PDU session with a network element on the first satellite and/or the second satellite based on configuration information.

In some scenarios, the access network device and the user plane network element (for example, a UPF, an SGW, or a PGW) are deployed on different satellites. In this case, the seventh network element may notify a satellite where the access network device to which the first terminal device is to be connected is located and an inter-satellite link between a satellite where the access network device to which the first terminal device is connected is located and a satellite where the user plane network element is located.

In some other scenarios, the access network device and the session management network element (for example, an MME or an SMF) are deployed on different satellites. In this case, the seventh network element may notify a satellite where the access network device to which the first terminal device is to be connected is located and an inter-satellite link between a satellite where the access network device to which the first terminal device is connected is located and a satellite where the user plane network element is located.

In some scenarios, after the seventh network element transmits the configuration information, the seventh network element is required to separately trigger terminal devices to establish a connection with a satellite. For example, the seventh network element triggers establishing a connection between the first terminal device and the first satellite. For another example, the seventh network element triggers establishing a connection between the second terminal device and the second satellite.

In an example in which establishing a connection includes establishing a PDU session, the seventh network element triggers establishing the PDU session, and then configures a packet detection rule (for example, may include an IP 5-tuple, or a source interface), and a forwarding rule (for example, includes a destination interface) for a satellite (for example, the first satellite and/or the second satellite). Correspondingly, if the first terminal device transmits a data packet to the second terminal device, the first satellite may detect the data packet based on the packet detection rule, and forward the data packet to the second satellite based on the destination interface. Correspondingly, the second satellite may detect a data packet based on a packet detection rule, and transmit the data packet to the second terminal device based on the destination interface. It should be understood that a solution in which the second terminal device transmits the data packet to the first terminal device is similar to the foregoing solution in which the first terminal device transmits the data packet to the second terminal device. For brevity, details are not described again.

It is assumed that network elements deployed on the first satellite and the second satellite include a UPF and an access network device. If the first terminal device transmits a data packet to the second terminal device, the network element on the first satellite may configure that, in the packet detection rule, a source address is an address of the first terminal device, a destination address is an address of the second terminal device, and a source interface is an access side (access side). In this case, the destination interface in the forwarding rule associated with the packet detection rule is an address of the second satellite (certainly, or may be an identifier of the second satellite or an identifier of a network element on the second satellite). The network element on the second satellite may configure that, in the packet detection rule, the source address in the packet detection rule is an address of the first terminal device, the destination address is an address of the second terminal device, and the source interface is an address of the first satellite (certainly, or may be an identifier of the first satellite or an identifier of the network element on the first satellite). In this case, the forwarding rule associated with the packet detection rule is an access side (access side).

If the second terminal device transmits the data packet to the first terminal device, the network element on the first satellite may configure that, in the packet detection rule, the source address is the address of the second terminal device, the destination address is the address of the first terminal device, the source interface is the address of the second satellite (certainly, or may be the identifier of the second satellite, or the identifier of the network element on the second satellite), and the destination interface in the forwarding rule associated with the packet detection rule is the access side (access side). The network element on the second satellite configures that, in the packet detection rule, the source address is the address of the second terminal device, the destination address is the address of the first terminal device, the source interface is the access side (access side), and the forwarding rule associated with the packet detection rule is the address of the first satellite (certainly, or may be the identifier of the first satellite or the identifier of network element on the first satellite).

For ease of understanding, the following describes a solution for configuring a communications link according to an embodiment of this application with reference to FIG. 11. It is assumed that a satellite SAT-1 serves a first terminal device, and a SAT-2 serves a second terminal device. The method shown in FIG. 11 includes step S1110 to step S1130. It should be understood that, for a second request and response information to the second request in FIG. 11, reference may be made to the foregoing description. FIG. 11 mainly illustrates execution steps of a method procedure in an embodiment of this application.

In step S1110, a seventh network element transmits configuration information to an SAT-1, to configure a communication link or communication between the first terminal device and an SAT 2.

In step S1120, the SAT-1 transmits the configuration information to the first terminal device.

In step S1130, the first terminal device establishes the communication link with the SAT-2 based on the configuration information, and the communication link is used for UE-Satellite-UE communication between the first terminal device and the second terminal device.

### Embodiment 4

In some scenarios, a first terminal device may perform communication with a second terminal device by using one or more satellites, and the communication is also referred to as UE-Satellite-UE communication. However, how to determine a satellite that can provide a service for communication between the first terminal device and the second terminal device is currently not specified in a standard.

To solve the foregoing problem, this application provides a wireless communication method. In this method, a network element (also referred to as an "eighth network element") in a communications system may transmit second information to a ninth network element, where the second information is used to determine service range information of a satellite associated with the eighth network element. In other words, the ninth network element may collect service ranges of satellites associated with network elements in the communications system, so that a network element serving communication between a first terminal device and a second terminal device may be subsequently determined based on the information collected by the ninth network element.

FIG. 12 is a schematic flowchart of a wireless communication method according to an embodiment of this application. The method shown in FIG. 12 includes step S1210. An eighth network element transmits second information to a ninth network element, and the second information is used to determine service range information of a satellite associated with the eighth network element.

In some implementations, the second information includes one or more of the following: information for indicating a service area in service of the satellite; information for indicating a time in which the satellite serves a target area; information indicating a terminal device stored in the satellite; identifier information of the satellite; or identifier information of a network element on the satellite.

For example, the second information includes the information for indicating a service area in service of the satellite, which helps the ninth network element to determine the information about the service area of the satellite based on the second information, so that a proper satellite may be provided in selecting a satellite serving a second terminal device.

In some implementations, the service area may include one or more of the following: a TAI, a cell identity, a longitude of the service area, or a latitude of the service area.

For example, the second information includes the information for indicating a time in which the satellite serves a target area, and the time is also referred to as a "service time". Alternatively, the second information may include times in which respective ones of the one or more satellites serve the first terminal device, which helps the ninth network element determines a service time of the satellite based on the second information, so that a proper satellite may be provided in selecting a satellite serving the second terminal device.

In embodiments of this application, a manner of indicating the service time is not limited. In some implementations, the second information may include one or more of the following: a start time of the service time, an end time of the service time, or duration of the service time.

For example, the second information indicates only the start time of the service time. In this case, the duration of the service time may be predefined or pre-configured. In this case, a first device may determine the service time based on the start time and the duration.

For another example, the second information indicates only the end time of the service time. In this case, duration of the service time may be predefined or pre-configured. In this case, the first device may determine the service time based on the end time and the duration.

In embodiments of this application, an implementation manner of the service time is not limited. In some implementations, the service time may be represented by a time window. In some other implementations, the service time may alternatively be represented by a period of time. In some other implementations, the service time may alternatively be periodic. In this case, the second information may further include a period of the service time. In some other implementations, the service time may alternatively be represented by an instant.

In an example in which the second information includes the information indicating a terminal device stored in the satellite, the second information may include information about the terminal device served by the satellite. In some implementations, the information about the terminal device may include a context of the terminal device. In some other implementations, the information about the terminal device includes identifier information of the terminal device; and/or location information of the terminal device.

In some implementations, the identifier information of the terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations, the location information of the terminal device may be an actual location of the terminal device, or the location information of the terminal device may include registration area information of the terminal device and/or information about an area last accessed by the terminal device in a connected state. Certainly, in embodiments of this application, the location information of the terminal device may further include target area information associated with the terminal device. For related descriptions of the target area information, reference may be made to the foregoing description.

In embodiments of this application, a manner of indicating the information about the area last accessed by the terminal device in the connected state is not limited. For example, the information about the area last accessed may include a tracking area last accessed by the terminal device in the connected state. For another example, the information about the area last accessed may include a cell identity of the area last accessed by the terminal device in the connected state. For another example, the information about the area last accessed may include longitude information and/or latitude information of the area last accessed by the terminal device in the connected state.

For example, the second information includes the identifier information of the satellite. In some implementations, the identifier information of the satellite may include identifier information of each satellite. In some other implementations, the identifier information of the satellite may include identifier information of a group in which the satellite is located.

For example, the second information includes the identifier information of the network element on the satellite, which helps the ninth network element determine, based on the second information, a network element deployed on the satellite, so that in selecting a satellite serving the second terminal device, a network element serving the second terminal device on a corresponding satellite may be further determined.

If the network element is an access network device, the identifier information of the network element may include an access network device identifier. If the network element is an AMF, the identifier information of the network element may include an AMF identifier. If the network element is an SMF, the identifier information of the network element may include an SMF identifier.

In embodiments of this application, a manner of triggering the second information is not limited. In some implementations, the second information may be triggered based on a request from the ninth network element, that is, the second information may be transmitted according to a requirement of the ninth network element, which helps improve transmitting efficiency of the second information. In other words, before step S1210, the method further includes: transmitting, by the ninth network element, a third request to the eighth network element, where the third request may be, for example, a subscription request. In some other implementations, the second information may alternatively be triggered periodically, and a period of the second information may be predefined and pre-configured. In some other implementations, the second information may alternatively be triggered based on an event.

In some implementations, the third request carries one or more of the following: identifier information of one or more terminal devices; information for determining a reporting time of the second information; or information for indicating a trigger condition of the second information.

In some implementations, the identifier information of the one or more terminal devices may be understood as identifier information of the one or more terminal devices requested by the ninth network element.

In embodiments of this application, the identifier information of the terminal device is not limited. For example, the identifier information of the terminal device may include one or more of the following: a telephone number, a GPSI, an SUPI, an SUCI, a PEI, a TMSI, a GUTI, a 5G-S-TMSI, a GUAMI, an RNTI, a C-RNTI, or an I-RNTI.

In some implementations, the information for determining a reporting time of the second information may include a reporting period of the second information and/or a reporting frequency of the second information. Certainly, in embodiments of this application, the reporting time may alternatively be a specific reporting time of the second information. In embodiments of this application, the information for determining a reporting time of the second information is carried in the third request, which helps reduce a delay of reporting the second information.

In some implementations, a trigger condition determined based on the information for determining the trigger condition of the second information may be associated with one or more of the following: an area of interest of the ninth network element; or a time of interest of the ninth network element. In embodiments of this application, the third request may carry the information for determining the trigger condition of the second information, which helps reduce a delay of reporting the second information.

In some implementations, if the trigger condition is associated with the area of interest (AoI) of the ninth network element, the trigger condition may include that second information corresponding to the area of interest of the ninth network element changes. In embodiments of this application, the trigger condition may include that the second information corresponding to the area of interest of the ninth network element changes. Correspondingly, the eighth network element may determine, based on the trigger condition, whether to transmit the second information, which helps simplify a process of transmitting the second information.

For example, the triggering condition may include that a satellite service range in the area of interest of the ninth network element changes.

For another example, a UE accesses the eighth network element on a satellite in a specified area of interest. In this case, the eighth network element on the satellite stores a UE context of the UE. Correspondingly, if the eighth network element confirms that an event occurs, the eighth network element may transmit the second information to the ninth network element, where the second information may include the UE context of the UE or UE contexts of all UEs in the area of interest.

In embodiments of this application, a manner of indicating the area of interest is not limited. In some implementations, the area of interest may be indicated by one or more tracking areas. In some other implementations, the area of interest may be indicated by a cell identity of one or more cells. In some other implementations, the area of interest may be indicated by longitude information and/or latitude information.

In some implementations, if the trigger condition is associated with a time of interest of the ninth network element, the trigger condition may include that second information corresponding to the time of interest of the ninth network element changes. In embodiments of this application, the trigger condition may include that the second information corresponding to the time of interest of the ninth network element changes. Correspondingly, the eighth network element may determine, based on the trigger condition, whether to transmit the second information, which helps simplify a process of transmitting the second information.

For example, the trigger condition may include that a satellite service range in the time of interest to the ninth network element changes.

For another example, a UE accesses the eighth network element on a satellite in a time of interest. In this case, the eighth network element on the satellite stores a UE context of the UE. Correspondingly, if the eighth network element confirms that an event occurs, the eighth network element may transmit the second information to the ninth network element, where the second information may include the UE context of the UE or UE contexts of all UEs in the area of interest.

In embodiments of this application, a manner of indicating the time of interest is not limited. In some implementations, the third request may include one or more of the following: a start time of the time of interest, an end time of the time of interest, or duration of the time of interest.

For example, the third request indicates only the start time of the time of interest. In this case, the duration of the time of interest may be predefined or pre-configured. In this case, the eighth network element may determine the time of interest of the ninth network element based on the start time and the duration.

For another example, the third request indicates only the end time of the time of interest. In this case, the duration of the time of interest may be predefined or pre-configured. In this case, the eighth network element may determine the time of interest based on the end time and the duration.

In embodiments of this application, an implementation manner of the time of interest is not limited. In some implementations, the time of interest may be represented by a time window. In some other implementations, the time of interest may alternatively be represented by a period of time. In some other implementations, the time of interest may be periodic. In this case, the third request may further include a period of the time of interest. In some other implementations, the time of interest may alternatively be represented by an instant.

In embodiments of this application, the ninth network element is not limited. In some implementations, the ninth network element may be an access network device. In another implementation, the ninth network element may be any core network element described above. In another implementation, the ninth network element may include an access network device and a core network element. For example, the ninth network element may include an access network device and an AMF. For example, the ninth network element may include an access network device and an MME.

For ease of understanding, the following describes a solution of transmitting satellite service information according to an embodiment of this application with reference to FIG. 13. It is assumed that the ninth network element is a network element located on a satellite. The method illustrated in FIG. 13 includes step S1310 and step S1320. It should be understood that, for the third request and the second information in FIG. 13, reference may be made to the foregoing description. FIG. 13 mainly illustrates execution steps of a method procedure in an embodiment of this application.

In step S1310, a ninth network element transmits a third request to an eighth network element, to request, from the eighth network element, service range information of a satellite on which the eighth network element is located.

In step S1320, in response to the third request, the eighth network element transmits second information to the ninth network element, to indicate the service range information of the satellite on which the eighth network element is located.

In embodiments of this application, meanings of the terms "service" and "coverage" may be replaced with each other. For example, the term "service area" may be replaced with "coverage area". For another example, the term "service time" may be replaced with "coverage time".

In addition, in embodiments of this application, "the satellite providing a service for the terminal device" may include that the satellite provides a satellite access service for the terminal device. In other words, in a period of time, the satellite may cover a location where the terminal device is located, so that the terminal device may access the satellite.

Typically, a satellite providing a service may be referred to as a serving satellite (serving satellite). Depending on different orbits, the service satellite covers a given geographic area (for example, the area where the terminal device is located) for a limited time.

In addition, the foregoing embodiments of this application may be used separately. Alternatively, the foregoing embodiments of this application may be used in combination. In some scenarios, the solution used to determine the first satellite serving the second terminal device described in Embodiment 1 may be used as a basis for Embodiment 2 and Embodiment 3. For example, the first satellite serving the second terminal device may be determined based on the solution described in Embodiment 1, and then authorization of communication performed between the first terminal device and the second terminal device by using the first satellite is requested for based on the solution described in Embodiment 2. This helps improve a possibility of finding out the satellite serving the second terminal device, thereby improving a possibility of communication between the first terminal device and the second terminal device. For another example, the first satellite serving the second terminal device may be determined based on the solution described in Embodiment 1, and then configuration of a communication link between the first terminal device and the second terminal device by using the first satellite is requested for based on the solution described in Embodiment 3. This helps improve a possibility of finding out the satellite serving the second terminal device, thereby improving properness of configuring the communication link between the first terminal device and the second terminal device.

In some other scenarios, the solution for reporting the second information in Embodiment 4 may be used as a prerequisite for implementing Embodiment 1. In other words, the ninth network element may collect the second information used to determine a service range of each satellite, so as to subsequently search for the satellite serving the second terminal device. In embodiments of this application, the solution for reporting second information in Embodiment 4 is used to collect related information of a satellite in a communications system, and then the solution in Embodiment 1 is used to search for the satellite serving the second terminal device, which helps improve a possibility of finding out the satellite serving the second terminal device.

The method embodiments of this application are described above in detail with reference to FIG. 1 to FIG. 13. Apparatus embodiments of this application are described below in detail with reference to FIG. 14 to FIG. 23. It should be understood that the descriptions of the method embodiments correspond to descriptions of the apparatus embodiments, and therefore, for parts that are not described in detail, reference may be made to the foregoing method embodiments.

FIG. 14 is a schematic diagram of a communications device according to an embodiment of this application. A communications device 1400 shown in FIG. 14 is a first network element. The communications device 1400 shown in FIG. 14 includes a transmitting unit 1410.

The transmitting unit 1410 is configured to transmit first information to a second network element, where the first information is associated with a first satellite serving a second terminal device. The second network element includes a first terminal device or a network element serving the first terminal device.

In some implementations, the first satellite is used for communication between the first terminal device and the second terminal device.

In some implementations, the first information includes one or more of the following: identifier information of one or more first satellites; identifier information of a network element deployed on the first satellite; or information for indicating a time in which the first satellite servers the second terminal device.

In some implementations, the transmitting unit is configured to transmit the first information to the second network element by using a third network element. The third network element includes a network element having a network repository function and/or a network element serving the first terminal device.

In some implementations, the communications device further includes a receiving unit, configured to receive a first request transmitted by the second network element, where the first request is used to request the first information.

In some implementations, the first request includes one or more of the following: information associated with the second terminal device; information associated with the first terminal device; or information for indicating a time for communication between the first terminal device and the second terminal device.

In some implementations, the first request includes the information associated with the second terminal device, and the information associated with the second terminal device includes one or more of the following: identification information of one or more second terminal devices; address information of one or more second terminal devices; identifier information of a terminal group in which the second terminal device is located; or target area information.

In some implementations, the first request includes the target area information, and one or more terminal devices in a target area corresponding to the target area information are all the second terminal device; or the target area information is used to indicate an area in which the second terminal device is located.

In some implementations, the first request includes the information associated with the first terminal device, and the information associated with the first terminal device includes one or more of the following: identifier information of the first terminal device; address information of the first terminal device; identifier information of one or more satellites serving the first terminal device; ephemeris information of one or more satellites serving the first terminal device; identifier information of network elements in one or more satellites serving the first terminal device; service area information of one or more network elements serving the first terminal device; or information about a time in which the one or more satellites serve the first terminal device.

In some implementations, the receiving unit is further configured to receive, by using a fourth network element, the first request transmitted by the second network element, where the fourth network element includes a network element having a network repository function and/or a network element serving the first terminal device.

In some implementations, in a case that the fourth network element includes the network element having the network repository function and the network element serving the first terminal device, the network element having the network repository function and the network element serving the first terminal device meet one of the following: the network element having the network repository function and the network element serving the first terminal device being located on a same satellite; the network element having the network repository function and the network element serving the first terminal device being located on different satellites; or the network element having the network repository function being located on the ground, and the network element serving the first terminal device being located on a satellite.

In some implementations, the first satellite is determined based on location information of the second terminal device and a service range of the first satellite.

In some implementations, the first network element is an access and mobility management network element, and the service range of the first satellite is determined by the first network element based on a tracking area broadcast by an access network device on the first satellite; and/or the location information of the second terminal device is determined based on context information of the second terminal device stored in the first network element.

In some implementations, the first network element is determined by the network element serving the first terminal device by using the network element having the network repository function, and the network element having the network repository function stores one or more of the following information: satellite ephemeris information of the first satellite; context information of the second terminal device; service area information of the first satellite; or tracking area information transmitted by an access network device on the first satellite.

In some implementations, the first satellite is a satellite in which a user plane network element associated with the second terminal device is located, and the user plane network element associated with the second terminal device is determined based on address information of the second terminal device.

In some implementations, the first network element is an access network device, and in a case that the second terminal device is in a service range of the access network device, the first satellite is a satellite corresponding to the first access network device.

In some implementations, the first satellite is determined by the first network element based on pre-stored information of the second terminal device and/or the information about the first satellite.

FIG. 15 is a schematic diagram of a communications device according to an embodiment of this application. A communications device 1500 shown in FIG. 15 is a second network element, and the communications device 1500 includes a receiving unit 1510.

The receiving unit 1510 is configured to receive first information transmitted by a first network element, where the first information is associated with a first satellite serving a second terminal device. The second network element includes a first terminal device or a network element serving the first terminal device.

In some implementations, the first satellite is used for communication between the first terminal device and the second terminal device.

In some implementations, the first information includes one or more of the following: identifier information of one or more first satellites; identifier information of a network element deployed on the first satellite; or information for indicating a time in which the first satellite servers the second terminal device.

In some implementations, the receiving unit is configured to receive, by using a third network element, the first information transmitted by the first network element, where the third network element includes a network element having a network repository function and/or a network element serving the first terminal device.

In some implementations, the second network element includes a network element having a network repository function and/or a network element serving the first terminal device. The communications device further includes: a first transmitting unit, configured to transmit the first information to the first terminal device.

In some implementations, the communications device further includes a second transmitting unit, configured to transmit a first request to the first network element, where the first request is used to request the first information.

In some implementations, the first request includes one or more of the following: information associated with the second terminal device; information associated with the first terminal device; or information for indicating a time for communication between the first terminal device and the second terminal device.

In some implementations, the first request includes the information associated with the second terminal device, and the information associated with the second terminal device includes one or more of the following: identification information of one or more second terminal devices; address information of one or more second terminal devices; identifier information of a terminal group in which the second terminal device is located; or target area information.

In some implementations, the first request includes the target area information, and one or more terminal devices in a target area corresponding to the target area information are all the second terminal device; or the target area information is used to indicate an area in which the second terminal device is located.

In some implementations, the first request includes the information associated with the first terminal device, and the information associated with the first terminal device includes one or more of the following: identifier information of the first terminal device; address information of the first terminal device; identifier information of one or more satellites serving the first terminal device; ephemeris information of one or more satellites serving the first terminal device; service area information of one or more network elements serving the first terminal device; identifier information of network elements in one or more satellites serving the first terminal device; or information about a time in which the one or more satellites serve the first terminal device.

In some implementations, the second transmitting unit is further configured to transmit the first request to the first network element by using a fourth network element, where the fourth network element includes a network element having a network repository function; and/or a network element serving the first terminal device.

In some implementations, in a case that the fourth network element includes the network element having the network repository function and the network element serving the first terminal device, the network element having the network repository function and the network element serving the first terminal device meet one of the following: the network element having the network repository function and the network element serving the first terminal device being located on a same satellite; the network element having the network repository function and the network element serving the first terminal device being located on different satellites; or the network element having the network repository function being located on the ground, and the network element serving the first terminal device being located on a satellite.

In some implementations, the second network element includes the network element having the network repository function and/or the network element serving the first terminal device. Before the second network element transmits the first request to the first network element, the receiving unit is further configured to receive the first request transmitted by the first terminal device.

In some implementations, the first satellite is determined based on location information of the second terminal device and a service range of the first satellite.

In some implementations, the first network element is an access and mobility management network element, and the service range of the first satellite is determined by the first network element based on a tracking area broadcast by an access network device on the first satellite; and/or the location information of the second terminal device is determined based on context information of the second terminal device stored in the first network element.

In some implementations, the first network element is determined by the network element serving the first terminal device by using the network element having the network repository function, and the network element having the network repository function stores one or more of the following information: satellite ephemeris information of the first satellite; context information of the second terminal device; service area information of the first satellite; or tracking area information transmitted by an access network device on the first satellite.

In some implementations, the first satellite is a satellite in which a user plane network element associated with the second terminal device is located, and the user plane network element associated with the second terminal device is determined based on address information of the second terminal device.

In some implementations, the first network element is an access network device, and in a case that the second terminal device is in a service range of the access network device, the first satellite is a satellite corresponding to the first access network device.

In some implementations, the first satellite is determined by the first network element based on pre-stored information of the second terminal device and/or the information about the first satellite.

FIG. 16 is a schematic diagram of a terminal device according to an embodiment of this application. A terminal device 1600 shown in FIG. 16 is a first terminal device, and the terminal device 1600 includes a transmitting unit 1610.

The transmitting unit 1610 is configured to transmit a second request to a fifth network element, where the second request is used to request authorizing the first terminal device to perform communication with a second terminal device by using a satellite.

In some implementations, the second request includes one or more of the following: information associated with the first terminal device; information associated with the second terminal device; information for indicating that communication between the first terminal device and the second terminal device is performed by using the satellite; or information associated with a first service, where the first service is a service communicated between the first terminal device and the second terminal device by using the satellite.

In some implementations, if the second request includes the information associated with the first service, the information associated with the first service includes one or more of the following: information for indicating duration of the first service; or information for indicating a service type of the first service.

In some implementations, the second request includes the information associated with the second terminal device, and the information associated with the second terminal device includes one or more of the following: identification information of one or more second terminal devices; address information of one or more second terminal devices; identifier information of a terminal group in which the second terminal device is located; or target area information.

In some implementations, the second request includes the target area information, and the target area information indicates that one or more terminal devices in a scheduling target area are all the second terminal devices; or the target area information is used to indicate a target area in which the second terminal device is located.

In some implementations, the second request includes the information associated with the first terminal device, and the information associated with the first terminal device includes one or more of the following: identifier information of the first terminal device; address information of the first terminal device; identifier information of one or more satellites serving the first terminal device; or identifier information of one or more network elements serving the first terminal device.

In some implementations, the fifth network element includes a network element serving the second terminal device, and the second request is transmitted by the fifth network element to the second terminal device.

In some implementations, the second terminal device is determined by the fifth network element based on identifier information of the second terminal device; or the second terminal device is determined by the fifth network element based on location information of the second terminal device.

In some implementations, the fifth network element is not a network element serving the second terminal device, the second request is transmitted by the fifth network element to a sixth network element, and the sixth network element serves the second terminal device.

In some implementations, the terminal device further includes: a first receiving unit, configured to receive response information to the second request, transmitted by the fifth network element, where the response information to the second request is used to indicate whether to agree to or refuse to authorize the communication.

In some implementations, in a case that the response information to the second request is used to indicate that the second terminal device refuses to authorize the communication, a response message to the second request is used to indicate a reason why the second terminal device refuses to authorize the communication.

In some implementations, the response information to the second request is transmitted by the second terminal device to the fifth network element.

In some implementations, the response information to the second request is transmitted to the fifth network element by a sixth network element serving the second terminal device.

In some implementations, the fifth network element and the sixth network element are access network devices, and the fifth network element and the sixth network element meet one of the following: the fifth network element and the sixth network element are deployed on different satellites; the fifth network element and the sixth network element are deployed on a same satellite; the fifth network element is deployed on a satellite, and the sixth network element is deployed on the ground; or the fifth network element is deployed on the ground, and the sixth network element is deployed on a satellite.

In some implementations, the sixth network element further includes an access and mobility management network element, and the access and mobility management network element is located on the ground, or the access and mobility management network element is located on a satellite.

In some implementations, whether to agree to or refuse to authorize the communication is determined by the fifth network element.

In some implementations, whether to agree to or refuse to authorize the communication is determined based on one or more of the following information: resource occupation status of the second terminal device; a priority of a service transmitted based on the communication; or a priority of the first terminal device.

In some implementations, the fifth network element is an access network device, and the fifth network element serves the first terminal device and the second terminal device.

In some implementations, whether the second terminal device accepts or rejects the communication is determined based on one or more of the following information: location information of the first terminal device; or location information of the second terminal device.

In some implementations, the fifth network element is an access and mobility management network element.

In some implementations, whether to agree to or refuse to authorize the communication is determined based on one or more of the following information: identity verification information of the first terminal device; or subscription information of the first terminal device.

In some implementations, the fifth network element is an authentication server function network element.

FIG. 17 is a schematic diagram of a communications device according to an embodiment of this application. A communications device 1700 shown in FIG. 17 is a fifth network element, and the communications device 1700 includes a receiving unit 1710.

The receiving unit 1710 is configured to receive a second request transmitted by a first terminal device, where the second request is used to request authorizing the first terminal device to perform communication with a second terminal device by using a satellite.

In some implementations, the second request includes one or more of the following: information associated with the first terminal device; information associated with the second terminal device; information for indicating that communication between the first terminal device and the second terminal device is performed by using the satellite; or information associated with a first service, where the first service is a service communicated between the first terminal device and the second terminal device by using the satellite.

In some implementations, if the second request includes the information associated with the first service, the information associated with the first service includes one or more of the following: information for indicating duration of the first service; or information for indicating a service type of the first service.

In some implementations, the second request includes the information associated with the second terminal device, and the information associated with the second terminal device includes one or more of the following: identification information of one or more second terminal devices; address information of one or more second terminal devices; identifier information of a terminal group in which the second terminal device is located; or target area information.

In some implementations, the second request includes the target area information, and the target area information indicates that one or more terminal devices in a scheduling target area are all the second terminal devices; or the target area information is used to indicate a target area in which the second terminal device is located.

In some implementations, the second request includes the information associated with the first terminal device, and the information associated with the first terminal device includes one or more of the following: identifier information of the first terminal device; address information of the first terminal device; identifier information of one or more satellites serving the first terminal device; or identifier information of one or more network elements serving the first terminal device.

In some implementations, the fifth network element includes a network element serving the second terminal device, and the communications device further includes: a first transmitting unit, configured to transmit the second request to the second terminal device.

In some implementations, the second terminal device is determined by the fifth network element based on identifier information of the second terminal device; or the second terminal device is determined by the fifth network element based on location information of the second terminal device.

In some implementations, the fifth network element is not a network element serving the second terminal device, and the communications device further includes: a second transmitting unit, configured to transmit the second request to a sixth network element, where the sixth network element serves the second terminal device.

In some implementations, the communications device further includes: a third transmitting unit, configured to transmit response information to the second request to the first terminal device, where the response information to the second request is used to indicate whether to agree to or refuse to authorize the communication.

In some implementations, in a case that the response information to the second request is used to indicate that the second terminal device refuses to authorize the communication, a response message to the second request is used to indicate a reason why the second terminal device refuses to authorize the communication.

In some implementations, before the fifth network element transmits the response information to the second request to the first terminal device, the receiving unit is further configured to receive the response information to the second request transmitted by the second terminal device.

In some implementations, the receiving unit is further configured to receive response information to the second request, transmitted by a sixth network element serving the second terminal device.

In some implementations, the fifth network element and the sixth network element are access network devices, and the fifth network element and the sixth network element meet one of the following: the fifth network element and the sixth network element are deployed on different satellites; the fifth network element and the sixth network element are deployed on a same satellite; the fifth network element is deployed on a satellite, and the sixth network element is deployed on the ground; or the fifth network element is deployed on the ground, and the sixth network element is deployed on a satellite.

In some implementations, the sixth network element further includes an access and mobility management network element, and the access and mobility management network element is located on the ground, or the access and mobility management network element is located on a satellite.

In some implementations, the communications device further includes: a processing unit, configured to determine to agree to or refuse to authorize the communication in response to receiving the second request.

In some implementations, whether to agree to or refuse to authorize the communication is determined based on one or more of the following information: resource occupation status of the second terminal device; a priority of a service transmitted based on the communication; or a priority of the first terminal device.

In some implementations, the fifth network element is an access network device, and the fifth network element serves the first terminal device and the second terminal device.

In some implementations, whether to agree to or refuse to authorize the communication is determined based on one or more of the following information: location information of the first terminal device; or location information of the second terminal device.

In some implementations, the fifth network element is an access and mobility management network element.

In some implementations, whether to agree to or refuse to authorize the communication is determined based on one or more of the following information: identity verification information of the first terminal device; or subscription information of the first terminal device.

In some implementations, the fifth network element is an authentication server function network element.

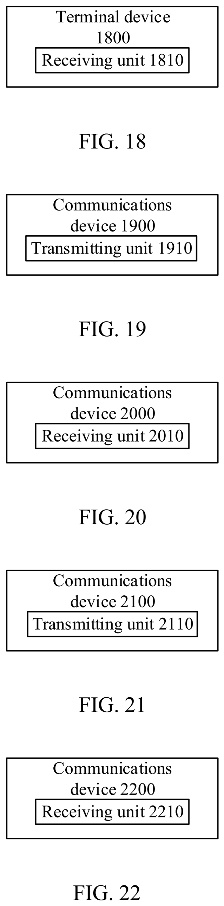

FIG. 18 is a schematic diagram of a terminal device according to an embodiment of this application. A terminal device 1800 shown in FIG. 18 is a second terminal device, and the terminal device 1800 includes a receiving unit 1810.

The receiving unit 1810 is configured to receive a second request transmitted by a first terminal device, where the second request is used to request authorizing the first terminal device to perform communication with the second terminal device by using a satellite.

In some implementations, the second request includes one or more of the following: information associated with the first terminal device; information associated with the second terminal device; information for indicating that communication between the first terminal device and the second terminal device is performed by using the satellite; or information associated with a first service, where the first service is a service communicated between the first terminal device and the second terminal device by using the satellite.

In some implementations, if the second request includes the information associated with the first service, the information associated with the first service includes one or more of the following: information for indicating duration of the first service; or information for indicating a service type of the first service.

In some implementations, the second request includes the information associated with the second terminal device, and the information associated with the second terminal device includes one or more of the following: identification information of one or more second terminal devices; address information of one or more second terminal devices; identifier information of a terminal group in which the second terminal device is located; or a serving area.

In some implementations, the second request includes the service area, and one or more terminal devices in a target area corresponding to the service area are all the second terminal devices; or the service area is used to indicate a target area in which the second terminal device is located.

In some implementations, the second request includes the information associated with the first terminal device, and the information associated with the first terminal device includes one or more of the following: identifier information of the first terminal device; address information of the first terminal device; identifier information of one or more satellites serving the first terminal device; or identifier information of one or more network elements serving the first terminal device.

In some implementations, the second terminal device receives the second request transmitted by the first terminal device, and the receiving unit is further configured to receive, via a fifth network element, the second request transmitted by the first terminal device.

In some implementations, the second terminal device is determined by the fifth network element based on identifier information of the second terminal device; or the second terminal device is determined by the fifth network element based on location information of the second terminal device.

In some implementations, the fifth network element is not a network element serving the second terminal device. The receiving unit is further configured to receive, via a sixth network element, the second request transmitted by the first terminal device, where the sixth network element serves the second terminal device, and the second request is transmitted by the fifth network element to the second terminal device via the sixth network element.

In some implementations, the terminal device further includes: a transmitting unit, configured to transmit response information to the second request to the first terminal device, where the response information to the second request is used to indicate whether to agree to or refuse to authorize the communication.

In some implementations, in a case that the response information to the second request is used to indicate that the second terminal device refuses to authorize the communication, a response message to the second request is used to indicate a reason why the first terminal device refuses to authorize the communication.

In some implementations, the transmitting unit is configured to transmit the response information to the second request to the first terminal device via the fifth network element.

In some implementations, the response information to the second request is transmitted by the sixth network element to the first terminal device via the fifth network element, and the sixth network element serves the second terminal device.

In some implementations, the fifth network element and the sixth network element are access network devices, and the fifth network element and the sixth network element meet one of the following: the fifth network element and the sixth network element are deployed on different satellites; the fifth network element and the sixth network element are deployed on a same satellite; the fifth network element is deployed on a satellite, and the sixth network element is deployed on the ground; or the fifth network element is deployed on the ground, and the sixth network element is deployed on a satellite.

In some implementations, the sixth network element further includes an access and mobility management network element, and the access and mobility management network element is located on the ground, or the access and mobility management network element is located on a satellite.

FIG. 19 is a schematic diagram of a communications device according to an embodiment of this application. A communications device 1900 shown in FIG. 19 is a seventh network element, and the communications device 1900 includes a transmitting unit 1910.

The transmitting unit 1910 is configured to transmit configuration information to a first satellite, where the configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

In some implementations, the configuration information includes one or more of the following: a QoS parameter corresponding to the first communication link and/or the second communication link; an N4 rule corresponding to the first communication link and/or the second communication link; information for indicating a time in which one or more satellites serve the second terminal device; identifier information of a network element on the one or more satellites; or information for indicating that communication between the first terminal device and the second terminal device is performed by using a satellite. The one or more satellites include the second satellite used to serve the second terminal device.

In some implementations, the transmitting unit is configured to transmit the configuration information to the first terminal device via the first satellite.

In some implementations, the seventh network element includes one or more of the following: the first terminal device; the second terminal device; a session management network element; or a user plane network element.

FIG. 20 is a schematic diagram of a communications device according to an embodiment of this application. A communications device 2000 shown in FIG. 20 is a first satellite, and the communications device 2000 includes a receiving unit 2010.

The receiving unit 2010 is configured to receive configuration information transmitted by a seventh network element, where the configuration information is used to configure one or more of the following: a first communication link used for communication between a target terminal device and the first satellite; or a second communication link used for communication between the first satellite and a second satellite. The target terminal device includes a first terminal device and/or a second terminal device, and at least one of the first communication link or the second communication link is used for communication between the first terminal device and the second terminal device.

In some implementations, the configuration information includes one or more of the following: a QoS parameter corresponding to the first communication link and/or the second communication link; an N4 rule corresponding to the first communication link and/or the second communication link; information for indicating a time in which one or more satellites serve the second terminal device; identifier information of a network element on the one or more satellites; or information for indicating that communication between the first terminal device and the second terminal device is performed by using a satellite. The one or more satellites include the second satellite used to serve the second terminal device.

In some implementations, the communications device further includes a transmitting unit, configured to transmit the configuration information to the first terminal device.

In some implementations, the seventh network element includes one or more of the following: the first terminal device; the second terminal device; a session management network element; or a user plane network element.

FIG. 21 is a schematic diagram of a communications device according to an embodiment of this application. A communications device 2100 shown in FIG. 21 is an eighth network element, and the communications device 2100 includes a transmitting unit 2110.

The transmitting unit 2110 is configured to transmit second information to a ninth network element, where the second information is used to determine service range information of a satellite associated with the eighth network element.

In some implementations, the second information includes one or more of the following: information for indicating a service area in service of the satellite; information for indicating a time in which the satellite serves a target area; information indicating a terminal device stored in the satellite; identifier information of the satellite; or identifier information of a network element on the satellite.

In some implementations, the second information includes the information indicating the terminal device stored in the satellite, and the information indicating the terminal device stored in the satellite includes one or more of the following: identifier information of the terminal device; or location information of the terminal device.

In some implementations, the location information of the terminal device includes registration area information of the terminal device and/or information about an area last accessed by the terminal device in a connected state.

In some implementations, the communications device further includes a receiving unit, configured to receive a third request transmitted by the ninth network element, where the third request is used to request the second information.

In some implementations, the third request carries one or more of the following: identifier information of one or more terminal devices; information for determining a reporting time of the second information; or information for indicating a trigger condition of the second information.

In some implementations, in a case that the third request carries the information for determining the reporting time of the second information, the information for determining the reporting time of the second information includes a reporting period of the second information and/or a reporting frequency of the second information.

In some implementations, in a case that the third request carries information for determining the trigger condition, the trigger condition is associated with one or more of the following: an area of interest of the ninth network element; or a time of interest of the ninth network element.

In some implementations, the trigger condition includes one or more of the following: second information corresponding to the area of interest of the ninth network element changes; or second information corresponding to the time of interest of the ninth network element changes.

FIG. 22 is a schematic diagram of a communications device according to an embodiment of this application. A communications device 2200 shown in FIG. 22 is a ninth network element, and the communications device 2200 includes a receiving unit 2210.

The receiving unit 2210 is configured to receive second information transmitted by an eighth network element, where the second information is used to determine service range information of a satellite associated with the eighth network element.

In some implementations, the second information includes one or more of the following: information for indicating a service area in service of the satellite; information for indicating a time in which the satellite serves a target area; information indicating a terminal device stored in the satellite; identifier information of the satellite; or identifier information of a network element on the satellite.

In some implementations, the second information includes the information indicating the terminal device stored in the satellite, and the information indicating the terminal device stored in the satellite includes one or more of the following: identifier information of the terminal device; or location information of the terminal device.

In some implementations, the location information of the terminal device includes registration area information of the terminal device and/or information about an area last accessed by the terminal device in a connected state.

In some implementations, the communications device further includes a transmitting unit, configured to transmit a third request to the eighth network element, where the third request is used to request the second information.

In some implementations, the third request carries one or more of the following: identifier information of one or more terminal devices; information for determining a reporting time of the second information; or information for indicating a trigger condition of the second information.

In some implementations, in a case that the third request carries the information for determining the reporting time of the second information, the information for determining the reporting time of the second information includes a reporting period of the second information and/or a reporting frequency of the second information.

In some implementations, in a case that the third request carries information for determining the trigger condition, the trigger condition is associated with one or more of the following: an area of interest of the ninth network element; or a time of interest of the ninth network element.

In some implementations, the trigger condition includes one or more of the following: second information corresponding to the area of interest of the ninth network element changes; or second information corresponding to the time of interest of the ninth network element changes.

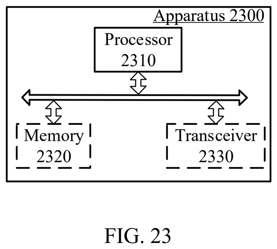

FIG. 23 is a schematic diagram of a structure of a communications apparatus according to an embodiment of this application. Dashed lines in FIG. 23 indicate that a unit or module is optional. The apparatus 2300 may be configured to implement the methods described in the foregoing method embodiments. The apparatus 2300 may be a chip, a terminal device, or a network device.

The apparatus 2300 may include one or more processors 2310. The processor 2310 may support the apparatus 2300 in implementing the methods described in the foregoing method embodiments. The processor 2310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2300 may further include one or more memories 2320. The memory 2320 stores a program, where the program may be executed by the processor 2310, to cause the processor 2310 to execute the methods described in the method embodiments. The memory 2320 may be separated from or integrated into the processor 2310.

The apparatus 2300 may further include a transceiver 2330. The processor 2310 may communicate with another device or chip by using the transceiver 2330. For example, the processor 2310 may transmit data to and receive data from another device or chip through the transceiver 2330.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.
In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.
In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.
The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first network element, first information to a second network element, wherein the first information is associated with a first satellite serving a second terminal device,
wherein the second network element comprises a first terminal device or a network element serving the first terminal device.

2. The method according to claim 1, wherein the first satellite is used for communication between the first terminal device and the second terminal device.

3. The method according to claim 1 or 2, wherein the first information comprises one or more of following:
identifier information of one or more first satellites;
identifier information of a network element deployed on the first satellite; or
information for indicating a time in which the first satellite servers the second terminal device.

4. The method according to any one of claims 1 to 3, wherein the transmitting, by the first network element, the first information to the second network element comprises:
transmitting, by the first network element, the first information to the second network element by using a third network element, wherein the third network element comprises a network element having a network repository function and/or a network element serving the first terminal device.

5. The method according to any one of claims 1 to 4, wherein the method further comprises:
receiving, by the first network element, a first request transmitted by the second network element, wherein the first request is used to request the first information.

6. The method according to claim 5, wherein the first request comprises one or more of following:
information associated with the second terminal device;
information associated with the first terminal device; or
information for indicating a time for communication between the first terminal device and the second terminal device.

7. The method according to claim 6, wherein the first request comprises the information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

8. The method according to claim 7, wherein the first request comprises the target area information, and one or more terminal devices in a target area corresponding to the target area information are all the second terminal device; or
the target area information is used to indicate an area in which the second terminal device is located.

9. The method according to any one of claims 5 to 8, wherein the first request comprises information associated with the first terminal device, and the information associated with the first terminal device comprises one or more of following:
identifier information of the first terminal device;
address information of the first terminal device;
identifier information of one or more satellites serving the first terminal device;
ephemeris information of one or more satellites serving the first terminal device;
identifier information of network elements in one or more satellites serving the first terminal device;
service area information of one or more network elements serving the first terminal device; or
information about a time in which the one or more satellites serve the first terminal device.

10. The method according to any one of claims 5 to 9, wherein the receiving, by the first network element, the first request transmitted by the second network element comprises:
receiving, by the first network element by using a fourth network element, the first request transmitted by the second network element, wherein the fourth network element comprises a network element having a network repository function and/or a network element serving the first terminal device.

11. The method according to claim 10, wherein in a case that the fourth network element comprises the network element having the network repository function and the network element serving for the first terminal device, the network element having the network repository function and the network element serving the first terminal device meet one of following:
the network element having the network repository function and the network element serving the first terminal device being located on a same satellite;
the network element having the network repository function and the network element serving the first terminal device being located on different satellites; or
the network element having the network repository function being located on the ground, and the network element serving the first terminal device being located on a satellite.

12. The method according to any one of claims 1 to 11, wherein the first satellite is determined based on location information of the second terminal device and a service range of the first satellite.

13. The method according to claim 12, wherein the first network element is an access and mobility management network element, and the service range of the first satellite is determined by the first network element based on a tracking area broadcast by an access network device on the first satellite; and/or
the location information of the second terminal device is determined based on context information of the second terminal device stored in the first network element.

14. The method according to claim 12, wherein the first network element is determined by the network element serving the first terminal device by using a network element having a network repository function, and the network element having the network repository function stores one or more of following information:
satellite ephemeris information of the first satellite;
context information of the second terminal device;
service area information of the first satellite; or
tracking area information transmitted by an access network device on the first satellite.

15. The method according to any one of claims 1 to 11, wherein the first satellite is a satellite in which a user plane network element associated with the second terminal device is located, and the user plane network element associated with the second terminal device is determined based on address information of the second terminal device.

16. The method according to any one of claims 1 to 11, wherein the first network element is an access network device, and in a case that the second terminal device is in a service range of the access network device, the first satellite is a satellite corresponding to the first access network device.

17. The method according to any one of claims 1 to 11, wherein the first satellite is determined by the first network element based on pre-stored information about the second terminal device and/or information about the first satellite.

18. A wireless communication method, comprising:
receiving, by a second network element, first information transmitted by a first network element, wherein the first information is associated with a first satellite serving a second terminal device,
wherein the second network element comprises a first terminal device or a network element serving the first terminal device.

19. The method according to claim 18, wherein the first satellite is used for communication between the first terminal device and the second terminal device.

20. The method according to claim 18 or 19, wherein the first information comprises one or more of following:
identifier information of one or more first satellites;
identifier information of a network element deployed on the first satellite; or
information for indicating a time in which the first satellite servers the second terminal device.

21. The method according to any one of claims 18 to 20, wherein the receiving, by the second network element, the first information transmitted by the first network element comprises:
receiving, by the second network element by using a third network element, the first information transmitted by the first network element, wherein the third network element comprises a network element having a network repository function and/or a network element serving the first terminal device.

22. The method according to any one of claims 18 to 20, wherein the second network element comprises a network element having a network repository function and/or the network element serving the first terminal device, and the method further comprises:
transmitting, by the second network element, the first information to the first terminal device.

23. The method according to any one of claims 18 to 22, wherein the method further comprises:
transmitting, by the second network element, a first request to the first network element, wherein the first request is used to request the first information.

24. The method according to claim 23, wherein the first request comprises one or more of following:
information associated with the second terminal device;
information associated with the first terminal device; or
information for indicating a time for communication between the first terminal device and the second terminal device.

25. The method according to claim 24, wherein the first request comprises the information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

26. The method according to claim 25, wherein the first request comprises the target area information, and one or more terminal devices in a target area corresponding to the target area information are all the second terminal device; or
the target area information is used to indicate an area in which the second terminal device is located.

27. The method according to any one of claims 23 to 26, wherein the first request comprises information associated with the first terminal device, and the information associated with the first terminal device comprises one or more of following:
identifier information of the first terminal device;
address information of the first terminal device;
identifier information of one or more satellites serving the first terminal device;
ephemeris information of one or more satellites serving the first terminal device;
service area information of one or more network elements serving the first terminal device;
identifier information of network elements in one or more satellites serving the first terminal device; or
information about a time in which the one or more satellites serve the first terminal device.

28. The method according to any one of claims 23 to 27, wherein the transmitting, by the second network element, the first request to the first network element comprises:
transmitting, by the second network element, the first request to the first network element by using a fourth network element, wherein the fourth network element comprises a network element having a network repository function and/or a network element serving the first terminal device.

29. The method according to claim 28, wherein in a case that the fourth network element comprises the network element having the network repository function and the network element serving the first terminal device, the network element having the network repository function and the network element serving the first terminal device meet one of following:
the network element having the network repository function and the network element serving the first terminal device being located on a same satellite;
the network element having the network repository function and the network element serving the first terminal device being located on different satellites; or
the network element having the network repository function being located on the ground, and the network element serving the first terminal device being located on a satellite.

30. The method according to any one of claims 23 to 27, wherein the second network element comprises a network element having a network repository function and/or the network element serving the first terminal device, and before the transmitting, by the second network element, the first request to the first network element, the method further comprises:
receiving, by the second network element, the first request transmitted by the first terminal device.

31. The method according to any one of claims 18 to 30, wherein the first satellite is determined based on location information of the second terminal device and a service range of the first satellite.

32. The method according to claim 31, wherein the first network element is an access and mobility management network element, and the service range of the first satellite is determined by the first network element based on a tracking area broadcast by an access network device on the first satellite; and/or
the location information of the second terminal device is determined based on context information of the second terminal device stored in the first network element.

33. The method according to claim 32, wherein the first network element is determined by the network element serving the first terminal device by using a network element having a network repository function, and the network element having the network repository function stores one or more of following information:
satellite ephemeris information of the first satellite;
context information of the second terminal device;
service area information of the first satellite; or
tracking area information transmitted by an access network device on the first satellite.

34. The method according to any one of claims 18 to 30, wherein the first satellite is a satellite in which a user plane network element associated with the second terminal device is located, and the user plane network element associated with the second terminal device is determined based on address information of the second terminal device.

35. The method according to any one of claims 18 to 30, wherein the first network element is an access network device, and in a case that the second terminal device is in a service range of the access network device, the first satellite is a satellite corresponding to the first access network device.

36. The method according to any one of claims 18 to 30, wherein the first satellite is determined by the first network element based on pre-stored information about the second terminal device and/or information about the first satellite.

37. A wireless communication method, comprising:
transmitting, by a first terminal device, a second request to a fifth network element, wherein the second request is used to request authorizing the first terminal device to perform communication with a second terminal device by using a satellite.

38. The method according to claim 37, wherein the second request comprises one or more of following:
information associated with the first terminal device; or
information associated with the second terminal device;
information for indicating that communication between the first terminal device and the second terminal device is performed by using the satellite; or
information associated with a first service, wherein the first service is a service communicated between the first terminal device and the second terminal device by using the satellite.

39. The method according to claim 38, wherein in a case that the second request comprises the information associated with the first service, the information associated with the first service comprises one or more of following:
information for indicating duration of the first service; or
information for indicating a service type of the first service.

40. The method according to claim 38 or 39, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

41. The method according to claim 40, wherein the second request comprises the target area information, and the target area information indicates that one or more terminal devices in a scheduling target area are all the second terminal device; or
the target area information is used to indicate a target area in which the second terminal device is located.

42. The method according to any one of claims 38 to 41, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

43. The method according to any one of claims 37 to 42, wherein the fifth network element comprises a network element serving the second terminal device, and the second request is transmitted by the fifth network element to the second terminal device.

44. The method according to claim 43, wherein the second terminal device is determined by the fifth network element based on identifier information of the second terminal device; or
the second terminal device is determined by the fifth network element based on location information of the second terminal device.

45. The method according to any one of claims 37 to 42, wherein the fifth network element is not a network element serving the second terminal device, the second request is transmitted by the fifth network element to a sixth network element, and the sixth network element serves the second terminal device.

46. The method according to any one of claims 37 to 45, wherein the method further comprises:
receiving, by the first terminal device, response information to the second request, transmitted by the fifth network element, wherein the response information to the second request is used to indicate whether to agree to or refuse to authorize the communication.

47. The method according to claim 46, wherein in a case that the response information to the second request is used to indicate that the second terminal device refuses to authorize the communication, a response message to the second request is used to indicate a reason why the second terminal device refuses to authorize the communication.

48. The method according to claim 46 or 47, wherein the response information to the second request is transmitted by the second terminal device to the fifth network element.

49. The method according to claim 46 or 47, wherein the response information to the second request is transmitted to the fifth network element by a sixth network element serving the second terminal device.

50. The method according to any one of claims 45 to 49, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

51. The method according to any one of claims 45 to 50, wherein the sixth network element further comprises an access and mobility management network element, and the access and mobility management network element is located on the ground, or the access and mobility management network element is located on a satellite.

52. The method according to any one of claims 37 to 42, wherein whether to agree to or refuse to authorize the communication is determined by the fifth network element.

53. The method according to claim 52, wherein whether to agree to or refuse to authorize the communication is determined based on one or more of following information:
resource occupation status of the second terminal device;
a priority of a service transmitted based on the communication; or
a priority of the first terminal device.

54. The method according to claim 53, wherein the fifth network element is an access network device, and the fifth network element serves the first terminal device and the second terminal device.

55. The method according to claim 52, wherein whether the second terminal device accepts or rejects the communication is determined based on one or more of following information:
location information of the first terminal device; or
location information of the second terminal device.

56. The method according to claim 55, wherein the fifth network element is an access and mobility management network element.

57. The method according to claim 52, wherein whether to agree to or refuse to authorize the communication is determined based on one or more of following information:
identity verification information of the first terminal device; or
subscription information of the first terminal device.

58. The method according to claim 57, wherein the fifth network element is an authentication server function network element.

59. A wireless communication method, comprising:
receiving, by a fifth network element, a second request transmitted by a first terminal device, wherein the second request is used to request authorizing the first terminal device to perform communication with a second terminal device by using a satellite.

60. The method according to claim 59, wherein the second request comprises one or more of following:
information associated with the first terminal device;
information associated with the second terminal device;
information for indicating that communication between the first terminal device and the second terminal device is performed by using the satellite; or
information associated with a first service, wherein the first service is a service communicated between the first terminal device and the second terminal device by using the satellite.

61. The method according to claim 60, wherein in a case that the second request comprises the information associated with the first service, the information associated with the first service comprises one or more of following:
information for indicating duration of the first service; or
information for indicating a service type of the first service.

62. The method according to claim 60 or 61, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

63. The method according to claim 62, wherein the second request comprises the target area information, and the target area information indicates that one or more terminal devices in a scheduling target area are all the second terminal device; or
the target area information is used to indicate a target area in which the second terminal device is located.

64. The method according to any one of claims 60 to 63, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

65. The method according to any one of claims 59 to 64, wherein the fifth network element comprises a network element serving the second terminal device, and the method further comprises:
transmitting, by the fifth network element, the second request to the second terminal device.

66. The method according to claim 65, wherein the second terminal device is determined by the fifth network element based on identifier information of the second terminal device; or
the second terminal device is determined by the fifth network element based on location information of the second terminal device.

67. The method according to any one of claims 59 to 64, wherein the fifth network element is not a network element serving the second terminal device, and the method further comprises:
transmitting, by the fifth network element, the second request to a sixth network element, wherein the sixth network element serves the second terminal device.

68. The method according to any one of claims 59 to 67, wherein the method further comprises:
transmitting, by the fifth network element, response information to the second request to the first terminal device, wherein the response information to the second request is used to indicate whether to agree to or refuse to authorize the communication.

69. The method according to claim 68, wherein in a case that the response information to the second request is used to indicate that the second terminal device refuses to authorize the communication, a response message to the second request is used to indicate a reason why the second terminal device refuses to authorize the communication.

70. The method according to claim 68 or 69, wherein before the transmitting, by the fifth network element, the response information to the second request to the first terminal device, the method further comprises:
receiving, by the fifth network element, the response information to the second request, transmitted by the second terminal device.

71. The method according to claim 68 or 69, wherein before the transmitting, by the fifth network element, the response information to the second request to the first terminal device, the method further comprises:
receiving, by the fifth network element, response information to the second request, transmitted by a sixth network element serving the second terminal device.

72. The method according to any one of claims 67 to 71, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

73. The method according to any one of claims 67 to 72, wherein the sixth network element further comprises an access and mobility management network element, and the access and mobility management network element is located on the ground, or the access and mobility management network element is located on a satellite.

74. The method according to any one of claims 59 to 64, wherein the method further comprises:
in response to receiving the second request, determining, by the fifth network element, to agree to or refuse to authorize the communication.

75. The method according to claim 74, wherein whether to agree to or refuse to authorize the communication is determined based on one or more of following information:
resource occupation status of the second terminal device;
a priority of a service transmitted based on the communication; or
a priority of the first terminal device.

76. The method according to claim 75, wherein the fifth network element is an access network device, and the fifth network element serves the first terminal device and the second terminal device.

77. The method according to claim 74, wherein whether to agree to or refuse to authorize the communication is determined based on one or more of following information:
location information of the first terminal device; or
location information of the second terminal device.

78. The method according to claim 77, wherein the fifth network element is an access and mobility management network element.

79. The method according to claim 74, wherein whether to agree to or refuse to authorize the communication is determined based on one or more of following information:
identity verification information of the first terminal device; or
subscription information of the first terminal device.

80. The method according to claim 79, wherein the fifth network element is an authentication server function network element.

81. A wireless communication method, comprising:
receiving, by a second terminal device, a second request transmitted by a first terminal device, wherein the second request is used to request authorizing the first terminal device to perform communication with the second terminal device by using a satellite.

82. The method according to claim 81, wherein the second request comprises one or more of following:
information associated with the first terminal device;
information associated with the second terminal device;
information for indicating that communication between the first terminal device and the second terminal device is performed by using the satellite; or
information associated with a first service, wherein the first service is a service communicated between the first terminal device and the second terminal device by using the satellite.

83. The method according to claim 82, wherein in a case that the second request comprises the information associated with the first service, the information associated with the first service comprises one or more of following:
information for indicating duration of the first service; or
information for indicating a service type of the first service.

84. The method according to claim 82 or 83, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
a service area.

85. The method according to claim 84, wherein the second request comprises the service area, and one or more terminal devices in the target area corresponding to the service area are all the second terminal devices; or
the service area is used to indicate a target area in which the second terminal device is located.

86. The method according to any one of claims 82 to 85, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

87. The method according to any one of claims 81 to 86, wherein the receiving, by the second terminal device, the second request transmitted by the first terminal device, and the method further comprises:
receiving, by the second terminal device via a fifth network element, the second request transmitted by the first terminal device.

88. The method according to claim 87, wherein the second terminal device is determined by the fifth network element based on identifier information of the second terminal device; or
the second terminal device is determined by the fifth network element based on location information of the second terminal device.

89. The method according to any one of claims 81 to 86, wherein the fifth network element is not a network element serving the second terminal device, and the receiving, by the second terminal device, the second request transmitted by the first terminal device comprises:
receiving, by the second terminal device via a sixth network element, the second request transmitted by the first terminal device, wherein the sixth network element serves the second terminal device, and the second request is transmitted by the fifth network element to the second terminal device via the sixth network element.

90. The method according to any one of claims 81 to 89, wherein the method further comprises:
transmitting, by the second terminal device, response information to the second request to the first terminal device, wherein the response information to the second request is used to indicate whether to agree to or refuse to authorize the communication.

91. The method according to claim 90, wherein in a case that the response information to the second request is used to indicate that the second terminal device refuses to authorize the communication, a response message to the second request is used to indicate a reason why the first terminal device refuses to authorize the communication.

92. The method according to claim 90 or 91, wherein the transmitting, by the second terminal device, the response information to the second request to the first terminal device comprises:
transmitting, by the second terminal device, the response information to the second request to the first terminal device via a fifth network element.

93. The method according to claim 90 or 91, wherein the response information to the second request is transmitted by a sixth network element to the first terminal device via the fifth network element, and the sixth network element serves the second terminal device.

94. The method according to any one of claims 89 to 93, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

95. The method according to any one of claims 89 to 94, wherein the sixth network element further comprises an access and mobility management network element, and the access and mobility management network element is located on the ground, or the access and mobility management network element is located on a satellite.

96. A wireless communication method, comprising:
transmitting, by a seventh network element, configuration information to a first satellite, wherein the configuration information is used to configure one or more of following:
a first communication link used for communication between a target terminal device and the first satellite; or
a second communication link used for communication between the first satellite and a second satellite,
wherein the target terminal device comprises a first terminal device and/or a second terminal device, and at least one of the first communication link or the second communication link is used for communication between the first terminal device and the second terminal device.

97. The method according to claim 96, wherein the configuration information comprises one or more of following:
a QoS parameter corresponding to the first communication link and/or the second communication link;
an N4 rule corresponding to the first communication link and/or the second communication link;
information for indicating a time in which one or more satellites serve the second terminal device;
identifier information of a network element on the one or more satellites; or
information for indicating that communication between the first terminal device and the second terminal device is performed by using a satellite,
wherein the one or more satellites comprise the second satellite used to serve the second terminal device.

98. The method according to claim 96 or 97, wherein the transmitting, by the seventh network element, the configuration information to the first satellite comprises:
transmitting, by the seventh network element, the configuration information to the first terminal device via the first satellite.

99. The method according to any one of claims 96 to 98, wherein the seventh network element comprises one or more of following:
the first terminal device;
the second terminal device;
a session management network element; or
a user plane network element.

100. A wireless communication method, comprising:
receiving, by a first satellite, configuration information transmitted by a seventh network element, wherein the configuration information is used to configure one or more of following:
a first communication link used for communication between a target terminal device and the first satellite; or
a second communication link used for communication between the first satellite and a second satellite,
wherein the target terminal device comprises a first terminal device and/or a second terminal device, and at least one of the first communication link or the second communication link is used for communication between the first terminal device and the second terminal device.

101. The method according to claim 100, wherein the configuration information comprises one or more of following:
a QoS parameter corresponding to the first communication link and/or the second communication link;
an N4 rule corresponding to the first communication link and/or the second communication link;
information for indicating a time in which one or more satellites serve the second terminal device;
identifier information of a network element on the one or more satellites; or
information for indicating that communication between the first terminal device and the second terminal device is performed by using a satellite,
wherein the one or more satellites comprise the second satellite used to serve the second terminal device.

102. The method according to claim 100 or 101, wherein the method further comprises:
transmitting, by the first satellite, the configuration information to the first terminal device.

103. The method according to any one of claims 100 to 102, wherein the seventh network element comprises one or more of following:
the first terminal device;
the second terminal device;
a session management network element; or
a user plane network element.

104. A wireless communication method, comprising:
transmitting, by an eighth network element, second information to a ninth network element, wherein the second information is used to determine service range information of a satellite associated with the eighth network element.

105. The method according to claim 104, wherein the second information comprises one or more of following:
information for indicating a service area in service of the satellite;
information for indicating a time in which the satellite serves a target area;
information indicating a terminal device stored in the satellite;
identifier information of the satellite; or
identifier information of a network element on the satellite.

106. The method according to claim 105, wherein the second information comprises the information indicating the terminal device stored in the satellite, and the information indicating the terminal device stored in the satellite comprises one or more of following:
identity information of the terminal device; or
location information of the terminal device;

107. The method according to claim 106, wherein the location information of the terminal device comprises registration area information of the terminal device and/or information about an area last accessed by the terminal device in a connected state.

108. The method according to any one of claims 104 to 107, wherein before the transmitting, by the eighth network element, the second information to the ninth network element, the method further comprises:
receiving, by the eighth network element, a third request transmitted by the ninth network element, wherein the third request is used to request the second information.

109. The method according to claim 108, wherein the third request carries one or more of following:
identifier information of one or more terminal devices;
information for determining a reporting time of the second information; or
information for indicating a trigger condition of the second information.

110. The method according to claim 109, wherein in a case that the third request carries the information for determining the reporting time of the second information, the information for determining the reporting time of the second information comprises a reporting period of the second information and/or a reporting frequency of the second information.

111. The method according to claim 109, wherein in a case that the third request carries information for determining the trigger condition, the trigger condition is associated with one or more of following:
an area of interest of the ninth network element; or
a time of interest of the ninth network element.

112. The method according to claim 111, wherein the trigger condition comprises one or more of following:
second information corresponding to the area of interest of the ninth network element changes; or
second information corresponding to the time of interest of the ninth network element changes.

113. A wireless communication method, comprising:
receiving, by a ninth network element, second information transmitted by an eighth network element, wherein the second information is used to determine service range information of a satellite associated with the eighth network element.

114. The method according to claim 113, wherein the second information comprises one or more of following:
information for indicating a service area in service of the satellite;
information for indicating a time in which the satellite serves a target area;
information indicating a terminal device stored in the satellite;
identifier information of the satellite; or
identifier information of a network element on the satellite.

115. The method according to claim 114, wherein the second information comprises the information indicating the terminal device stored in the satellite, and the information indicating the terminal device stored in the satellite comprises one or more of following:
identity information of the terminal device; or
location information of the terminal device;

116. The method according to claim 115, wherein the location information of the terminal device comprises registration area information of the terminal device and/or information about an area last accessed by the terminal device in a connected state.

117. The method according to any one of claims 113 to 116, wherein before the receiving, by the ninth network element, the second information transmitted by the eighth network element, the method further comprises:
transmitting, by the ninth network element, a third request to the eighth network element, wherein the third request is used to request the second information.

118. The method according to claim 117, wherein the third request carries one or more of following:
identifier information of one or more terminal devices;
information for determining a reporting time of the second information; or
information for indicating a trigger condition of the second information.

119. The method according to claim 118, wherein in a case that the third request carries the information for determining the reporting time of the second information, the information for determining the reporting time of the second information comprises a reporting period of the second information and/or a reporting frequency of the second information.

120. The method according to claim 118, wherein in a case that the third request carries information for determining the trigger condition, the trigger condition is associated with one or more of following:
an area of interest of the ninth network element; or
a time of interest of the ninth network element.

121. The method according to claim 120, wherein the trigger condition comprises one or more of following:
second information corresponding to the area of interest of the ninth network element changes; or
second information corresponding to the time of interest of the ninth network element changes.

122. A communications device, wherein the communications device is a first network element and comprises:
a transmitting unit, configured to transmit first information to a second network element, wherein the first information is associated with a first satellite serving a second terminal device,
wherein the second network element comprises a first terminal device or a network element serving the first terminal device.

123. The communications device according to claim 122, wherein the first satellite is used for communication between the first terminal device and the second terminal device.

124. The communications device according to claim 122 or 123, wherein the first information comprises one or more of following:
identifier information of one or more first satellites;
identifier information of a network element deployed on the first satellite; or
information for indicating a time in which the first satellite servers the second terminal device.

125. The communications device according to any one of claims 122 to 124, wherein the transmitting unit is configured to:
transmit the first information to the second network element by using a third network element, wherein the third network element comprises a network element having a network repository function and/or a network element serving the first terminal device.

126. The communications device according to any one of claims 122 to 125, wherein the communications device further comprises:
a receiving unit, configured to receive a first request transmitted by the second network element, wherein the first request is used to request the first information.

127. The communications device according to claim 126, wherein the first request comprises one or more of following:
information associated with the second terminal device;
information associated with the first terminal device; or
information for indicating a time for communication between the first terminal device and the second terminal device.

128. The communications device according to claim 127, wherein the first request comprises the information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

129. The method according to claim 128, wherein the first request comprises the target area information, and one or more terminal devices in a target area corresponding to the target area information are all the second terminal device; or
the target area information is used to indicate an area in which the second terminal device is located.

130. The communications device according to any one of claims 126 to 129, wherein the first request comprises information associated with the first terminal device, and the information associated with the first terminal device comprises one or more of following:
identifier information of the first terminal device;
address information of the first terminal device;
identifier information of one or more satellites serving the first terminal device;
ephemeris information of one or more satellites serving the first terminal device;
identifier information of network elements in one or more satellites serving the first terminal device;
service area information of one or more network elements serving the first terminal device; or
information about a time in which the one or more satellites serve the first terminal device.

131. The communications device according to any one of claims 126 to 130, wherein the receiving unit is further configured to:
receive, by using a fourth network element, the first request transmitted by the second network element, wherein the fourth network element comprises a network element having a network repository function and/or a network element serving the first terminal device.

132. The communications device according to claim 131, wherein in a case that the fourth network element comprises the network element having the network repository function and the network element serving the first terminal device, the network element having the network repository function and the network element serving the first terminal device meet one of following:
the network element having the network repository function and the network element serving the first terminal device being located on a same satellite;
the network element having the network repository function and the network element serving the first terminal device being located on different satellites; or
the network element having the network repository function being located on the ground, and the network element serving the first terminal device being located on a satellite.

133. The communications device according to any one of claims 122 to 132, wherein the first satellite is determined based on location information of the second terminal device and a service range of the first satellite.

134. The communications device according to claim 133, wherein the first network element is an access and mobility management network element, and the service range of the first satellite is determined by the first network element based on a tracking area broadcast by an access network device on the first satellite; and/or
the location information of the second terminal device is determined based on context information of the second terminal device stored in the first network element.

135. The communications device according to claim 133, wherein the first network element is determined by the network element serving the first terminal device by using a network element having a network repository function, and the network element having the network repository function stores one or more of following information:
satellite ephemeris information of the first satellite;
context information of the second terminal device;
service area information of the first satellite; or
tracking area information transmitted by an access network device on the first satellite.

136. The communications device according to any one of claims 122 to 132, wherein the first satellite is a satellite in which a user plane network element associated with the second terminal device is located, and the user plane network element associated with the second terminal device is determined based on address information of the second terminal device.

137. The communications device according to any one of claims 122 to 132, wherein the first network element is an access network device, and in a case that the second terminal device is in a service range of the access network device, the first satellite is a satellite corresponding to the first access network device.

138. The communications device according to any one of claims 122 to 132, wherein the first satellite is determined by the first network element based on pre-stored information about the second terminal device and/or information about the first satellite.

139. A communications device, wherein the communications device is a second network element and comprises:
a receiving unit, configured to receive first information transmitted by a first network element, wherein the first information is associated with a first satellite serving a second terminal device,
wherein the second network element comprises a first terminal device or a network element serving the first terminal device.

140. The communications device according to claim 139, wherein the first satellite is used for communication between the first terminal device and the second terminal device.

141. The communications device according to claim 139 or 140, wherein the first information comprises one or more of following:
identifier information of one or more first satellites;
identifier information of a network element deployed on the first satellite; or
information for indicating a time in which the first satellite servers the second terminal device.

142. The communications device according to any one of claims 139 to 141, wherein the receiving unit is further configured to:
receive, by using a third network element, the first information transmitted by the first network element, wherein the third network element comprises a network element having a network repository function and/or a network element serving the first terminal device.

143. The communications device according to any one of claims 139 to 141, wherein the second network element comprises a network element having a network repository function and/or the network element serving the first terminal device, and the communications device further comprises:
a first transmitting unit, configured to transmit the first information to the first terminal device.

144. The communications device according to any one of claims 139 to 143, wherein the communications device further comprises:
a second transmitting unit, configured to transmit a first request to the first network element, wherein the first request is used to request the first information.

145. The communications device according to claim 144, wherein the first request comprises one or more of following:
information associated with the second terminal device;
information associated with the first terminal device; or
information for indicating a time for communication between the first terminal device and the second terminal device.

146. The communications device according to claim 145, wherein the first request comprises the information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

147. The method according to claim 146, wherein the first request comprises the target area information, and one or more terminal devices in a target area corresponding to the target area information are all the second terminal device; or
the target area information is used to indicate an area in which the second terminal device is located.

148. The communications device according to any one of claims 144 to 147, wherein the first request comprises information associated with the first terminal device, and the information associated with the first terminal device comprises one or more of following:
identifier information of the first terminal device;
address information of the first terminal device;
identifier information of one or more satellites serving the first terminal device;
ephemeris information of one or more satellites serving the first terminal device;
service area information of one or more network elements serving the first terminal device; or
identifier information of network elements in one or more satellites serving the first terminal device;
information about a time in which the one or more satellites serve the first terminal device.

149. The communications device according to any one of claims 144 to 148, wherein the second transmitting unit is further configured to:
transmit the first request to the first network element by using a fourth network element, wherein the fourth network element comprises a network element having a network repository function and/or a network element serving the first terminal device.

150. The communications device according to claim 149, wherein in a case that the fourth network element comprises the network element having the network repository function and the network element serving the first terminal device, the network element having the network repository function and the network element serving the first terminal device meet one of following:
the network element having the network repository function and the network element serving the first terminal device being located on a same satellite;
the network element having the network repository function and the network element serving the first terminal device being located on different satellites; or
the network element having the network repository function being located on the ground, and the network element serving the first terminal device being located on a satellite.

151. The communications device according to any one of claims 144 to 148, wherein the second network element comprises a network element having a network repository function and/or the network element serving the first terminal device, and before the second network element transmits the first request to the first network element, the receiving unit is further configured to:
receive the first request transmitted by the first terminal device.

152. The communications device according to any one of claims 139 to 151, wherein the first satellite is determined based on location information of the second terminal device and a service range of the first satellite.

153. The communications device according to claim 152, wherein the first network element is an access and mobility management network element, and the service range of the first satellite is determined by the first network element based on a tracking area broadcast by an access network device on the first satellite; and/or
the location information of the second terminal device is determined based on context information of the second terminal device stored in the first network element.

154. The communications device according to claim 153, wherein the first network element is determined by the network element serving the first terminal device by using a network element having a network repository function, and the network element having the network repository function stores one or more of following information:
satellite ephemeris information of the first satellite;
context information of the second terminal device;
service area information of the first satellite; or
tracking area information transmitted by an access network device on the first satellite.

155. The communications device according to any one of claims 139 to 151, wherein the first satellite is a satellite in which a user plane network element associated with the second terminal device is located, and the user plane network element associated with the second terminal device is determined based on address information of the second terminal device.

156. The communications device according to any one of claims 139 to 151, wherein the first network element is an access network device, and in a case that the second terminal device is in a service range of the access network device, the first satellite is a satellite corresponding to the first access network device.

157. The communications device according to any one of claims 139 to 151, wherein the first satellite is determined by the first network element based on pre-stored information about the second terminal device and/or information about the first satellite.

158. A terminal device, wherein the terminal device is a first terminal device and comprises:
a transmitting unit, configured to transmit a second request to a fifth network element, wherein the second request is used to request authorizing the first terminal device to perform communication with a second terminal device by using a satellite.

159. The terminal device according to claim 158, wherein the second request comprises one or more of following:
information associated with the first terminal device;
information associated with the second terminal device;
information for indicating that communication between the first terminal device and the second terminal device is performed by using the satellite; or
information associated with a first service, wherein the first service is a service communicated between the first terminal device and the second terminal device by using the satellite.

160. The terminal device according to claim 159, wherein in a case that the second request comprises the information associated with the first service, the information associated with the first service comprises one or more of following:
information for indicating duration of the first service; or
information for indicating a service type of the first service.

161. The terminal device according to claim 159 or 160, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

162. The terminal device according to claim 161, wherein the second request comprises the target area information, and the target area information indicates that one or more terminal devices in a scheduling target area are all the second terminal device; or
the target area information is used to indicate a target area in which the second terminal device is located.

163. The terminal device according to any one of claims 159 to 162, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

164. The terminal device according to any one of claims 158 to 163, wherein the fifth network element comprises a network element serving the second terminal device, and the second request is transmitted by the fifth network element to the second terminal device.

165. The terminal device according to claim 164, wherein the second terminal device is determined by the fifth network element based on identifier information of the second terminal device; or
the second terminal device is determined by the fifth network element based on location information of the second terminal device.

166. The terminal device according to any one of claims 158 to 163, wherein the fifth network element is not a network element serving the second terminal device, the second request is transmitted by the fifth network element to a sixth network element, and the sixth network element serves the second terminal device.

167. The terminal device according to any one of claims 158 to 166, wherein the terminal device further comprises:
a first receiving unit, configured to receive response information to the second request, transmitted by the fifth network element, wherein the response information to the second request is used to indicate whether to agree to or refuse to authorize the communication.

168. The terminal device according to claim 167, wherein in a case that the response information to the second request is used to indicate that the second terminal device refuses to authorize the communication, a response message to the second request is used to indicate a reason why the second terminal device refuses to authorize the communication.

169. The terminal device according to claim 167 or 168, wherein the response information to the second request is transmitted by the second terminal device to the fifth network element.

170. The terminal device according to claim 167 or 168, wherein the response information to the second request is transmitted to the fifth network element by a sixth network element serving the second terminal device.

171. The terminal device according to any one of claims 166 to 170, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

172. The terminal device according to any one of claims 166 to 171, wherein the sixth network element further comprises an access and mobility management network element, and the access and mobility management network element is located on the ground, or the access and mobility management network element is located on a satellite.

173. The terminal device according to any one of claims 158 to 163, wherein whether to agree to or refuse to authorize the communication is determined by the fifth network element.

174. The terminal device according to claim 173, wherein whether to agree to or refuse to authorize the communication is determined based on one or more of following information:
resource occupation status of the second terminal device;
a priority of a service transmitted based on the communication; or
a priority of the first terminal device.

175. The terminal device according to claim 174, wherein the fifth network element is an access network device, and the fifth network element serves the first terminal device and the second terminal device.

176. The terminal device according to claim 173, wherein whether the second terminal device accepts or rejects the communication is determined based on one or more of following information:
location information of the first terminal device; or
location information of the second terminal device.

177. The terminal device according to claim 176, wherein the fifth network element is an access and mobility management network element.

178. The terminal device according to claim 173, wherein whether to agree to or refuse to authorize the communication is determined based on one or more of following information:
identity verification information of the first terminal device; or
subscription information of the first terminal device.

179. The terminal device according to claim 178, wherein the fifth network element is an authentication server function network element.

180. A communications device, wherein the communications device is a second network element and comprises:
a receiving unit, configured to receive a second request transmitted by a first terminal device, wherein the second request is used to request authorizing the first terminal device to perform communication with a second terminal device by using a satellite.

181. The communications device according to claim 180, wherein the second request comprises one or more of following:
information associated with the first terminal device;
information associated with the second terminal device;
information for indicating that communication between the first terminal device and the second terminal device is performed by using the satellite; or
information associated with a first service, wherein the first service is a service communicated between the first terminal device and the second terminal device by using the satellite.

182. The communications device according to claim 181, wherein in a case that the second request comprises the information associated with the first service, the information associated with the first service comprises one or more of following:
information for indicating duration of the first service; or
information for indicating a service type of the first service.

183. The communications device according to claim 181 or 182, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
target area information.

184. The communications device according to claim 183, wherein the second request comprises the target area information, and the target area information indicates that one or more terminal devices in a scheduling target area are all the second terminal device; or
the target area information is used to indicate a target area in which the second terminal device is located.

185. The communications device according to any one of claims 181 to 184, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

186. The communications device according to any one of claims 180 to 185, wherein the fifth network element comprises a network element serving the second terminal device, and the communications device further comprises:
a first transmitting unit, configured to transmit the second request to the second terminal device.

187. The communications device according to claim 186, wherein the second terminal device is determined by the fifth network element based on identifier information of the second terminal device; or
the second terminal device is determined by the fifth network element based on location information of the second terminal device.

188. The communications device according to any one of claims 180 to 185, wherein the fifth network element is not a network element serving the second terminal device, and the communications device further comprises:
a second transmitting unit, configured to transmit the second request to a sixth network element, wherein the sixth network element serves the second terminal device.

189. The communications device according to any one of claims 180 to 188, wherein the communications device further comprises:
a third transmitting unit, configured to transmit response information to the second request to the first terminal device, wherein the response information to the second request is used to indicate whether to agree to or refuse to authorize the communication.

190. The communications device according to claim 189, wherein in a case that the response information to the second request is used to indicate that the second terminal device refuses to authorize the communication, a response message to the second request is used to indicate a reason why the second terminal device refuses to authorize the communication.

191. The communications device according to claim 189 or 190, wherein before the transmitting, by the fifth network element, the response information to the second request to the first terminal device, the receiving unit is further configured to:
receive the response information to the second request, transmitted by the second terminal device.

192. The communications device according to claim 189 or 190, wherein the receiving unit is further configured to:
receive response information to the second request, transmitted by a sixth network element serving the second terminal device.

193. The communications device according to any one of claims 188 to 192, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

194. The communications device according to any one of claims 188 to 193, wherein the sixth network element further comprises an access and mobility management network element, and the access and mobility management network element is located on the ground, or the access and mobility management network element is located on a satellite.

195. The communications device according to any one of claims 180 to 185, wherein the communications device further comprises:
a processing unit, configured to determine to agree to or refuse to authorize the communication in response to receiving the second request.

196. The communications device according to claim 195, wherein whether to agree to or refuse to authorize the communication is determined based on one or more of following information:
resource occupation status of the second terminal device;
a priority of a service transmitted based on the communication; or
a priority of the first terminal device.

197. The communications device according to claim 196, wherein the fifth network element is an access network device, and the fifth network element serves the first terminal device and the second terminal device.

198. The communications device according to claim 195, wherein whether to agree to or refuse to authorize the communication is determined based on one or more of following information:
location information of the first terminal device; or
location information of the second terminal device.

199. The communications device according to claim 198, wherein the fifth network element is an access and mobility management network element.

200. The communications device according to claim 195, wherein whether to agree to or refuse to authorize the communication is determined based on one or more of following information:
identity verification information of the first terminal device; or
subscription information of the first terminal device.

201. The communications device according to claim 200, wherein the fifth network element is an authentication server function network element.

202. A terminal device, wherein the terminal device is a second terminal device and comprises:
a receiving unit, configured to receive a second request transmitted by a first terminal device, wherein the second request is used to request authorizing the first terminal device to perform communication with the second terminal device by using a satellite.

203. The terminal device according to claim 202, wherein the second request comprises one or more of following:
information associated with the first terminal device;
information associated with the second terminal device;
information for indicating that communication between the first terminal device and the second terminal device is performed by using the satellite; or
information associated with a first service, wherein the first service is a service communicated between the first terminal device and the second terminal device by using the satellite.

204. The terminal device according to claim 203, wherein in a case that the second request comprises the information associated with the first service, the information associated with the first service comprises one or more of following:
information for indicating duration of the first service; or
information for indicating a service type of the first service.

205. The terminal device according to claim 203 or 204, wherein the second request comprises information associated with the second terminal device, and the information associated with the second terminal device comprises one or more of following:
identification information of one or more second terminal devices;
address information of one or more second terminal devices;
identifier information of a terminal group in which the second terminal device is located; or
a service area.

206. The terminal device according to claim 205, wherein the second request comprises the service area, and one or more terminal devices in a target area corresponding to the service area are all the second terminal devices; or
the service area is used to indicate a target area in which the second terminal device is located.

207. The terminal device according to any one of claims 203 to 206, wherein the second request comprises information associated with the first terminal device, and the information associated with the first terminal device comprises one or more of following:
identifier information of the first terminal device;
address information of the first terminal device;
identifier information of one or more satellites serving the first terminal device; or
identifier information of one or more network elements serving the first terminal device.

208. The terminal device according to any one of claims 202 to 207, wherein the second terminal device receives the second request transmitted by the first terminal device, and the receiving unit is further configured to:
receive, via a fifth network element, the second request transmitted by the first terminal device.

209. The terminal device according to claim 208, wherein the second terminal device is determined by the fifth network element based on identifier information of the second terminal device; or
the second terminal device is determined by the fifth network element based on location information of the second terminal device.

210. The terminal device according to any one of claims 202 to 207, wherein the fifth network element is not a network element serving the second terminal device, and the receiving unit is further configured to:
receive, via a sixth network element, the second request transmitted by the first terminal device, wherein the sixth network element serves the second terminal device, and the second request is transmitted by the fifth network element to the second terminal device via the sixth network element.

211. The terminal device according to any one of claims 202 to 210, wherein the terminal device further comprises:
a transmitting unit, configured to transmit response information to the second request to the first terminal device, wherein the response information to the second request is used to indicate whether to agree to or refuse to authorize the communication.

212. The terminal device according to claim 211, wherein in a case that the response information to the second request is used to indicate that the second terminal device refuses to authorize the communication, a response message to the second request is used to indicate a reason why the first terminal device refuses to authorize the communication.

213. The terminal device according to claim 211 or 212, wherein the transmitting unit is configured to:
transmit the response information to the second request to the first terminal device via a fifth network element.

214. The terminal device according to claim 211 or 212, wherein the response information to the second request is transmitted by a sixth network element to the first terminal device via the fifth network element, and the sixth network element serves the second terminal device.

215. The terminal device according to any one of claims 210 to 214, wherein the fifth network element and the sixth network element are access network devices, and the fifth network element and the sixth network element meet one of following:
the fifth network element and the sixth network element are deployed on different satellites;
the fifth network element and the sixth network element are deployed on a same satellite;
the fifth network element is deployed on a satellite, and the sixth network element is deployed on the ground; or
the fifth network element is deployed on the ground, and the sixth network element is deployed on a satellite.

216. The terminal device according to any one of claims 210 to 215, wherein the sixth network element further comprises an access and mobility management network element, and the access and mobility management network element is located on the ground, or the access and mobility management network element is located on a satellite.

217. A communications device, wherein the communications device is a seventh network element and comprises:
a transmitting unit, configured to transmit configuration information to a first satellite, wherein the configuration information is used to configure one or more of following:
a first communication link used for communication between a target terminal device and the first satellite; or
a second communication link used for communication between the first satellite and a second satellite,
wherein the target terminal device comprises a first terminal device and/or a second terminal device, and at least one of the first communication link or the second communication link is used for communication between the first terminal device and the second terminal device.

218. The communications device according to claim 217, wherein the configuration information comprises one or more of following:
a QoS parameter corresponding to the first communication link and/or the second communication link;
an N4 rule corresponding to the first communication link and/or the second communication link;
information for indicating a time in which one or more satellites serve the second terminal device;
identifier information of a network element on the one or more satellites; or
information for indicating that communication between the first terminal device and the second terminal device is performed by using a satellite,
wherein the one or more satellites comprise the second satellite used to serve the second terminal device.

219. The communications device according to claim 217 or 218, wherein the transmitting unit is configured to:
transmit the configuration information to the first terminal device via the first satellite.

220. The communications device according to any one of claims 217 to 219, wherein the seventh network element comprises one or more of following:
the first terminal device;
the second terminal device;
a session management network element; or
a user plane network element.

221. A communications device, wherein the communications device is a first satellite and comprises:
a receiving unit, configured to receive configuration information transmitted by a seventh network element, wherein the configuration information is used to configure one or more of following:
a first communication link used for communication between a target terminal device and the first satellite; or
a second communication link used for communication between the first satellite and a second satellite,
wherein the target terminal device comprises a first terminal device and/or a second terminal device, and at least one of the first communication link or the second communication link is used for communication between the first terminal device and the second terminal device.

222. The communications device according to claim 221, wherein the configuration information comprises one or more of following:
a QoS parameter corresponding to the first communication link and/or the second communication link;
an N4 rule corresponding to the first communication link and/or the second communication link;
information for indicating a time in which one or more satellites serve the second terminal device;
identifier information of a network element on the one or more satellites; or
information for indicating that communication between the first terminal device and the second terminal device is performed by using a satellite,
wherein the one or more satellites comprise the second satellite used to serve the second terminal device.

223. The communications device according to claim 221 or 222, wherein the communications device further comprises:
a transmitting unit, configured to transmit the configuration information to the first terminal device.

224. The communications device according to any one of claims 221 to 223, wherein the seventh network element comprises one or more of following:
the first terminal device;
the second terminal device;
a session management network element; or
a user plane network element.

225. A communications device, wherein the communications device is an eighth network element and comprises:
a transmitting unit, configured to transmit second information to a ninth network element, wherein the second information is used to determine service range information of a satellite associated with the eighth network element.

226. The communications device according to claim 225, wherein the second information comprises one or more of following:
information for indicating a service area in service of the satellite;
information for indicating a time in which the satellite serves a target area;
information indicating a terminal device stored in the satellite;
identifier information of the satellite; or
identifier information of a network element on the satellite.

227. The communications device according to claim 226, wherein the second information comprises the information indicating the terminal device stored in the satellite, and the information indicating the terminal device stored in the satellite comprises one or more of following:
identity information of the terminal device; or
location information of the terminal device.

228. The communications device according to claim 227, wherein the location information of the terminal device comprises registration area information of the terminal device and/or information about an area last accessed by the terminal device in a connected state.

229. The communications device according to any one of claims 225 to 228, wherein the communications device further comprises:
a receiving unit, configured to receive a third request transmitted by the ninth network element, wherein the third request is used to request the second information.

230. The communications device according to claim 229, wherein the third request carries one or more of following:
identifier information of one or more terminal devices;
information for determining a reporting time of the second information; or
information for indicating a trigger condition of the second information.

231. The communications device according to claim 230, wherein in a case that the third request carries the information for determining the reporting time of the second information, the information for determining the reporting time of the second information comprises a reporting period of the second information and/or a reporting frequency of the second information.

232. The communications device according to claim 230, wherein in a case that the third request carries information for determining the trigger condition, the trigger condition is associated with one or more of following:
an area of interest of the ninth network element; or
a time of interest of the ninth network element.

233. The communications device according to claim 232, wherein the trigger condition comprises one or more of following:
second information corresponding to the area of interest of the ninth network element changes; or
second information corresponding to the time of interest of the ninth network element changes.

234. A communications device, wherein the communications device is an eighth network element and comprises:
a receiving unit, configured to receive second information transmitted by an eighth network element, wherein the second information is used to determine service range information of a satellite associated with the eighth network element.

235. The communications device according to claim 234, wherein the second information comprises one or more of following:
information for indicating a service area in service of the satellite;
information for indicating a time in which the satellite serves a target area;
information indicating a terminal device stored in the satellite;
identifier information of the satellite; or
identifier information of a network element on the satellite.

236. The communications device according to claim 235, wherein the second information comprises the information indicating the terminal device stored in the satellite, and the information indicating the terminal device stored in the satellite comprises one or more of following:
identity information of the terminal device; or
location information of the terminal device.

237. The communications device according to claim 236, wherein the location information of the terminal device comprises registration area information of the terminal device and/or information about an area last accessed by the terminal device in a connected state.

238. The communications device according to any one of claims 234 to 237, wherein the communications device further comprises:
a transmitting unit, configured to transmit a third request to the eighth network element, wherein the third request is used to request the second information.

239. The communications device according to claim 238, wherein the third request carries one or more of following:
identifier information of one or more terminal devices;
information for determining a reporting time of the second information; or
information for indicating a trigger condition of the second information.

240. The communications device according to claim 239, wherein in a case that the third request carries the information for determining the reporting time of the second information, the information for determining the reporting time of the second information comprises a reporting period of the second information and/or a reporting frequency of the second information.

241. The communications device according to claim 239 or 240, wherein in a case that the third request carries information for determining the trigger condition, the trigger condition is associated with one or more of following:
an area of interest of the ninth network element; or
a time of interest of the ninth network element.

242. The communications device according to claim 241, wherein the trigger condition comprises one or more of following:
second information corresponding to the area of interest of the ninth network element changes; or
second information corresponding to the time of interest of the ninth network element changes.

243. A terminal device, comprising a transceiver, a memory, and a processor, wherein the memory is configured to store a program, and the processor is configured to invoke the program in the memory, and control the transceiver to receive or transmit a signal, so that the terminal device executes a method according to any one of claims 37 to 58 and claims 81 to 95.

244. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 36, 59 to 80, and 96 to 121.

245. An apparatus, comprising a processor configured to invoke a program from a memory, to cause the apparatus to execute the method according to any one of claims 1 to 121.

246. A chip, comprising a processor, configured to invoke a program from a memory to cause a device installed with the chip to execute the method according to any one of claims 1 to 121.

247. A computer-readable storage medium, wherein the computer-readable storage medium stores a program, and the program causes a computer to execute the method according to any one of claims 1 to 121.

248. A computer program product, comprising a program that causes a computer to execute the method according to any one of claims 1 to 121.

249. A computer program, wherein the computer program causes a computer to execute the method according to any one of claims 1 to 121.
